# EUROPEAN PATENT SPECIFICATION

(11) **EP 2 370 273 B1**
(45) Date of publication and mention of the grant of the patent: **09.04.2014**
(21) Application number: 09836546.3
(22) Date of filing: 27.01.2009
(51) Int. Cl.: B60C 11/13

(54) **SYSTEM FOR CHANGING SIPE BLADES FOR MOLDING OR RETREADING TIRES**
SYSTEM ZUM AUSTAUSCH VON LAMELLENBLÄTTERN ZUM FORMEN ODER RUNDERNEUERN VON REIFEN
SYSTÈME DE CHANGEMENT DES LAMES D'INCISION POUR LE MOULAGE ET LE RECHAPAGE DE PNEUS

(30) Priority: 31.12.2008 US 141870 P
(43) Date of publication of application: 05.10.2011
(60) Divisional application: 11167915.5
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: JENKINS, Brian, William, Greenville, SC 29615 (US); DE STAERCKE, Gildas, Simpsonville, SC 29681 (US); GARRETT, James, F., Simpsonville, SC 29680 (US); CRESS, Ronald, Simpsonville, SC 29681 (US)
(74) Representative: Dossmann, Gérard
(86) International application number: PCT/US2009/032079
(87) International publication number: WO 2010/077375

(56) References cited:
- EP-A1- 0 722 816
- JP-A- H0 872 061
- JP-A- H11 170 267
- KR-A- 20060 002 277
- US-A- 2 569 080
- US-A- 3 954 344
- US-A- 4 553 918
- US-B1- 6 196 818
- US-B1- 6 827 566
- US-B2- 7 143 799

## Description

### BACKGROUND OF THE INVENTION

### Field of the Invention

This invention relates generally to an apparatus for molding or retreading the tread stock of a tire, and more specifically, to a system for readily replacing sipe blades in such an apparatus with those having a different configuration, for replacing worn or broken sipe blades, or for eliminating a sipe blade altogether.

### Description of the Related Art

Molds and retread presses are types of equipment that are used to form features such as grooves, recesses, tread blocks, and sipes or lamellas on the tread stock of a tire. Sipes or lamellas are thin slits in the tread stock of a tire that enhance certain characteristics of the tire such as handling. Sipes are formed by thin projections or blades that extend from a curing surface of a mold or of a plate found in a retread press. In a molding situation, a new tire is placed in the mold and then the mold sectors which form the tread stock of the tire move in until projections such as sipe blades form the desired geometry on the tread stock. When forming a sipe, the blade penetrates the tread stock as the mold sectors move toward the tire. Once the mold sectors have moved completely into a closed position, the curing surfaces of the mold sectors are in contact with the tread stock of the tire and the top portion of the mold is closed such that the complete tire is encapsulated within the mold. The mold then supplies heat to the tread stock partially by conduction through the curing surfaces of the mold sectors to the exterior of the tire while heat is conducted to the interior of the tire via the membrane. This heats the rubber of the tire until it vulcanizes, leaving the geometry permanently embossed on the tire.

On the other hand, the retreading process is used to replace the tread on a used tire. First, the worn tire tread stock is removed from the tire. Second, new tire tread stock with the proper geometry is formed by placing a flat piece of tread stock in a retread press that has sipe blades and other projections found on a curing plate that has been installed into the press. The press is then closed until the sipe blades and other projections engage the tread stock and the curing plate presses up against the tread stock. Sometimes sipe blades are located on the top portion of the retread press when the sipes are intended to open up to the interior of the tire. Other times the blades are found on the bottom portion of the press when the sipes are intended to face toward the exterior of the tire. Heat is then conducted to the tread stock from both the bottom and top plates of the press until the rubber vulcanizes, leaving the geometry permanently embossed on the tread stock. Finally, the new tread stock is attached to the circumference of the tire.

When forming sipes on tread stock, regardless of whether it is by the molding or retreading processes, the sipe blades that form the sipes are thin and subject to repeated stress. Accordingly, these blades can become worn or broken. Therefore, there is a need to replace worn or broken blades with new blades. Also, different types of tires have different geometry on their tread stock with different features necessitating that sipe blades with different configurations be used. Also, the pattern in which sipe blades or other projections are arranged needs to be changed to produce different types of tires. As a result, there has also been a need to mold and retread tread stock with different features. One way to accomplish this is to have dedicated molds and curing plates with sipe blades and other projections permanently attached to them so that different types of tires can be manufactured. However, it is often cost prohibitive to make a dedicated mold sector or curing plate for every type of tire, especially in situations where a certain type of tire is produced in limited volumes. In such situations, it is preferable to have a mold sector or curing plate that can be changed over from one configuration to another, so that different features and/or sipe blade patterns and configurations can be embossed onto a tread stock using essentially the same apparatus. Therefore, it is desirable to have a system for molding or retreading tires that allows such a changeover. Finally, it would be desirous to provide a system that creates this changeover in a foolproof manner, prohibiting the assembler from creating incorrect geometry for producing a particular tire that would result in scrap and lost profits. Fool proofing can also prevent mold and press crashing caused by components of one side of an apparatus hitting the other side of the apparatus because components are improperly oriented or located, which is an undesirable expense.

Sipe blades come in two different basic configurations. The first type is called a two dimensional sipe blade, so called because its geometry varies in a plane that is parallel to the curing surface of a curing plate in the retreading application, or a plane that is perpendicular to the radius of the tire in a molding application. The geometry of a two dimensional sipe blade does not vary or is straight in the direction of draw for the sipe blade. The direction of draw is the direction a sipe blade moves to withdraw from the tread stock after the sipe has been formed. In the molding process, the draw direction is in a generally outward radial direction of the tire. In the retreading process, the draw direction is perpendicular to the curing surface and away from the tread stock. The second type of sipe blade is a three dimensional sipe blade and has geometry that varies both in a plane that is parallel to the draw direction and a plane that is perpendicular to the draw direction. An undercut is formed by a three dimensional sipe blade because of its geometrical variation in the direction of draw which can result in a larger force being necessary to withdraw the three dimensional sipe blade from the tread stock.

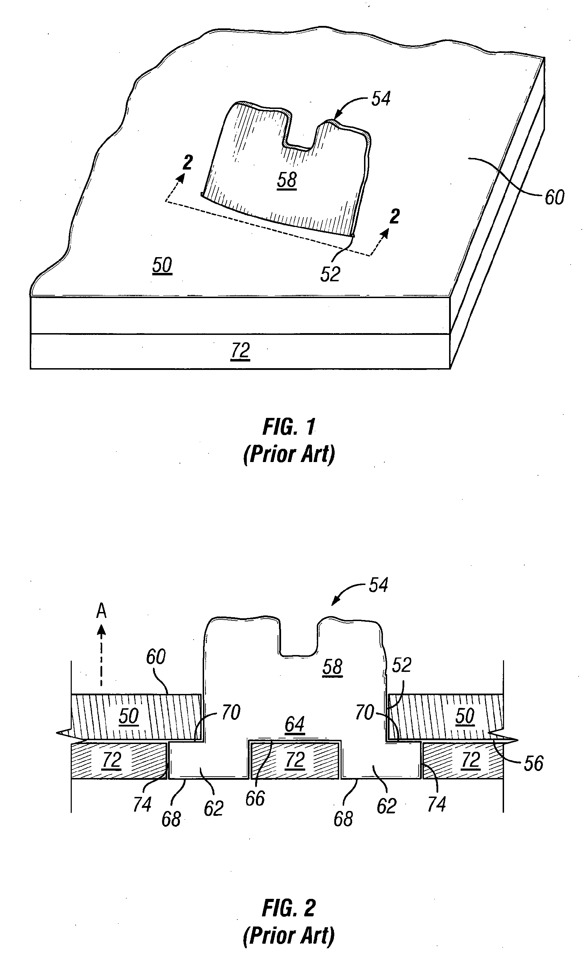

For reference, the spatial relationship between different features in this specification and the claims will be measured in the anti-draw direction which is parallel and opposite to the draw direction (see Figure **2** which shows the anti-draw direction as Arrow **A**). Accordingly, features that are located further in the anti-draw direction than others will be referred to as being "above" them. Likewise, features that are located further in the draw direction than others will be referred to as being "below" them. Similarly, the surface of a feature that is located furthest in the anti-draw direction will be referred to as being the "top" surface. On the other hand, the surface of a feature that is located furthest in the draw direction will be referred to as being the "bottom" surface.

Figures **1** and **2** disclose an apparatus that attempts to satisfy some of the aforementioned needs. Although it involves the use of a flat retreading press, it is to be understood that this apparatus could be easily modified to be used with a round mold for making a new tire or retreading an existing tire as well. This apparatus comprises a curing plate **50** that has a slit **52** formed in it using a wire EDM process. The slit **52** is configured to be complimentary to the shape of a two dimensional sipe blade **54** that is to be inserted through the bottom surface **56** of the curing plate **50** until the molding portion **58** of the sipe blade **54** has extended through the slit **52** and rises above the curing surface **60.** The gap between the blade **54** and the slit **52** is about six and a half hundredths of a millimeter on a side of the blade **54** on average in order to prevent the rubber from flashing into the recess during curing. As can be seen, the blade **54** has two heels **62** that extend from its retention portion **64,** which contact the bottom **56** of the curing plate **50,** preventing the sipe blade **54** from passing through the curing plate **50.** A piece of the retention portion **64** of the sipe blade **54** is cut out, separating the two heels **62** and forming a clamp surface 66 that is found above the bottom surface **68** of the heels **62** and which is coplanar with top surface **70** of the heels **62.** Hence, the clamp surface **66** of the sipe blade **54** is flush with the bottom surface **56** of the curing plate **50** when the top surfaces **70** of the heels **62** contact the bottom surface **56** of the curing plate **50,** leaving only the heels **62** extending below the curing plate **50.** A retainer plate **72** with apertures **74** configured to clear the heels **62** is mounted to the curing plate **50,** pressing onto the clamp surface **66** of the sipe blade **54** and capturing it between both plates.

This design allows two dimensional sipe blades **54** to be removed when worn or broken by simply disconnecting the retainer plate **72** from the curing plate **50** and pulling the sipe blade **54** back out of the slit **52.** However, this design has several drawbacks. First, the slit **52** is wired directly into the curing plate **50** which means only another sipe blade **54** that has the same two dimensional variation in its geometry can be used in that slit **52.** So this design does not allow a changeover to another sipe blade **54** having another configuration. Second, this design does not easily allow for a sipe blade **54** to be eliminated as the slit **52** will allow rubber to seep into it when no sipe blade **54** is present. Third, this design does not work for three dimensional sipe blades since the molding portions of these blades are larger than those of two dimensional sipe blades **54** and they cannot fit through the small slit **52** that accommodates two dimensional sipe blades **54**.

The technological background underlying the present invention is for example described in the following documents:
In order to provide a mold for molding a tire constituted so as to simply ensure a minute gap permitting air to pass but preventing the protrusion of rubber at the time of the vulcanization molding of a non-spew tire and capable of preventing and suppressing the deformation of the gap caused by the washing and cleaning of the mold and a change with the elapse of time. JPH0872061 (A) discloses use of pair of air venting flat plates which are inserted and fixed at the position where air between a mold and a tire is ready to remain in the contact surface of the mold and the tire at the time of the vulcanization molding of a tire. A first flat plate to which depressing processing is applied and a second flat plate to which no repressing processing is applied are mutually fitted to ensure a gap and the air passing through this gap is excluded to the outside through the groove of a rear holder 8. The flat plates are arbitrarily arranged at a position where air is easy to accumulate without being limited by the arranging place of them or the number of them. In a split sector mold (split mold), the flat plates are inserted in and fixed to the mutual mating surface of small pieces.
US6827566 (B1) discloses a blade for use in a tire mold, a combination of the blade with the tire mold, and a method of attaching the blade to the tire mold. An edge portion of the blade is received in a slot in the tire mold, and a body portion extends therefrom to form a sipe in a tire. One or a pair of tab portions attached to the edge portion is received in an indent in the slot, and a wedge forces the tab portion or portions into a locked position as the blade is driven into the slot. A break-away tendon or tendons attach the wedge to the tab portion or portions and break to allow wedge movement for achieving the locked position when the blade is driven into the slot. Alternatively, a wedge is pre-positioned in an housing in the indent whereby blade tab portions move into a locked position upon contact with the wedge.

Similar prior art is disclosed in KR20060002277(A).

Accordingly, there still exists a need for a system that allows all sipe blade configurations, including two and three dimensional, to be changed out for sipe blades having other configurations in molding or retreading processes and to selectively eliminate a sipe blade if so desired.

### SUMMARY OF THE INVENTION

The present invention provides an apparatus according to claim 1 that can be used in molding or retreading a tire and that also allows sipe replacement. The apparatus has the following components. First, there is a curing member that has a top surface that contacts the tread stock of the tire, a bottom surface, and an aperture that extends from the top surface to the bottom surface. Second, there is a blade holder that is configured to fit within the aperture of the curing member and that also has a body that defines a slit with a predetermined configuration and a top surface that contacts the tread stock. A heel is attached to the body of the blade holder that has a top surface, which contacts the curing member, and a bottom surface. Third, there is a sipe blade with a first portion for forming a sipe in the tire tread and a second portion for retaining the blade within the apparatus comprising a heel with a top surface and a bottom surface. The second portion of the sipe blade has a shape that is complimentary to the slit of the blade holder so that the sipe blade can fit within the blade holder. Also, the slit of the blade holder may extend into its heel and the second portion of the sipe blade may at least be partially located within the heel of the blade holder. Either of the heels of the sipe blade or blade holder may contact the curing member.

One embodiment of the present invention also includes an apparatus for molding or retreading a tire having sipes in its tread stock that has fool proofing characteristics for assembling the apparatus. The apparatus has the following components and features. First, there is a blade holder that has a predetermined configuration with a top surface that contacts the tire tread and a body that defines a slit with a predetermined configuration. The body also defines a hole that extends from the exterior of the blade holder to the slit. Second, there is a stop member disposed in the hole of the blade holder that extends into the slit of the blade holder. Third, there is a sipe blade that has a first portion for forming the sipe in the tire tread and a second portion that is shaped complimentary to the slit of blade holder so it can be contained within the blade holder. The sipe blade also has a slot with an open end and a closed end that is located and configured to receive the stop member. The location of the hole of the blade holder may be off-centered with respect to its body and the slot of the sipe blade may also be off-centered with respect to its body so that the sipe blade can only be fully inserted into the blade holder in a single orientation.

Yet another embodiment of the present invention provides a way to form sipes with undercuts in the direction of draw that blends into a groove found on a tread stock. The apparatus comprises a curing member with a top surface that contacts the tread, a bottom surface, and an aperture that extends from the top surface to the bottom surface. It also includes a sipe blade with a first portion that forms a sipe in the tread and a second portion that is contained within the apparatus. The first portion has an undercut in the direction of draw characterized by a male or female portion on the front surface of the sipe blade. There is also a blade holder that has a body with a bottom curing surface and a first spire that rises from the bottom curing surface to a top curing surface, said blade holder having a front surface that is configured to mate with an interior surface of the aperture of the curing member and a rear surface with a male or female portion that is complimentary to the male or female portion of the undercut of the sipe blade when the rear surface of the first blade holder is pressed against the front surface of the sipe blade so that there is no gap between the blade holder and sipe blade, preventing flash.

The sipe blade may also have an undercut in the direction of draw that is characterized by a male or female portion on the rear surface of the sipe blade. A second blade holder may then also be provided that has a body with a bottom curing surface and a first spire that rises from the bottom curing surface to a top curing surface, said second blade holder having a front surface that is configured to mate with an interior surface of the aperture of the curing member and a rear surface with a male or female portion on the spire that is complimentary to the male or female portion of the sipe blade when the rear surface of the second blade holder is pressed against the rear surface of the sipe blade so that there is no gap between the blade and blade holder, preventing flash.

The present invention also provides a method for assembling and disassembling an apparatus for molding or retreading tires according to claim 21 comprising the following steps. One step is providing a curing member with a top or curing surface, bottom surface and an aperture that extends from the top surface to the bottom surface. Another step is providing a blade holder with a slit found on its top or curing surface. Yet another step is providing a sipe blade with a first portion for molding or forming a sipe in the tread stock of a tire and a second portion that fits within the slit of the blade holder. Next, the assembler inserts the sipe blade into the slit of the blade holder by passing the sipe blade through the curing surface of the blade holder. Then the assembler inserts the sipe blade and blade holder into the aperture of the curing member. This may be accomplished by passing them through the bottom surface of the curing member into its aperture. Finally, the blade holder and sipe blade are retained in the curing member.

This method may also include the steps of removing any means retaining the blade holder and sipe blade in the apparatus and extracting the blade holder and sipe blade from the curing member. This may be accomplished by sliding them out of the aperture through the bottom surface of the curing member. This method further comprises the step of extracting the sipe blade from the blade holder out of its slit through its curing surface. These extractions are performed without damaging the sipe blade.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a perspective view of a prior art apparatus showing a method for replacing sipe blades in a molding or retreading apparatus;
FIG. **2** is a cross-sectional view of the prior art apparatus of FIG. **1** taken along line 2-2 thereof;
FIG. **3** is a perspective view of an apparatus according to the first embodiment of the present invention showing the use of several configurations of sipe blades and dummy inserts with only a portion of the plates shown for clarity;
FIG. **4** is a bottom view of the of the apparatus of FIG. **3**;
FIG. **4A** is a cross-sectional view of the apparatus of FIG. **4** taken along line 4A-4A thereof showing a sipe blade/blade holder subassembly held in the apparatus;
FIG. **4B** is a cross-sectional view of the apparatus of FIG. **4** taken along line 4B-4B thereof showing a dummy insert held in the apparatus;
FIG. **5** is an exploded assembly view of the apparatus of FIG. **3** with some sipe blade/blade holder subassemblies and dummy inserts removed to enhance clarity;
FIG. **6** is an exploded assembly view of sipe blade/blade holder subassembly of the apparatus of FIG. **3**;
FIG. **7** is an assembly view showing the notch of the curing plate of one plate subassembly receiving the bolt of another plate subassembly as they are installed into a retread press;
FIG. **8** is a perspective view of an apparatus according to the second embodiment of the present invention showing sipe blades in the outer rows of the curing plate that have three dimensional configurations in their middle portions that transition to two dimensional configurations on their sides that blend into projections found on the curing plate;
FIG. **9** is a perspective view of the apparatus of FIG. **8** with the sipe blades and blade holders of the outer rows of the curing plate removed showing the apertures and slits of the curing plate;
FIG. **10** is a bottom view of the apparatus of FIG. **9****;**
FIG. **11** is an enlarged view of the apparatus of FIG. **10****;**
FIG. **11A** is a cross-sectional view of the apparatus of FIG. **11** taken along line 11A-11A thereof showing the stepped pocket of the curing plate;
FIG. **12** is a partial top view of the apparatus of FIG. **8**;
FIG. **12A** is a cross-sectional view of the apparatus of FIG. **12** taken along line 12A-12A thereof;
FIG. **12B** is a cross-sectional view of the apparatus of FIG. **12** taken along line 12B-12B thereof;
FIG. **13** is an exploded assembly view of the apparatus of FIG. **8** showing the sipe blade/blade holder subassemblies being inserted into the curing plate followed by the retaining elements and cap screws;
FIG. **14** is an exploded assembly view of the sipe blade/blade holder subassembly of the apparatus of FIG. **8****;**
FIG. **15** is a bottom oriented perspective view of an apparatus according to the third embodiment of the present invention with the blade holder, sipe blade and retainer plate removed showing the heel pockets of the curing plate more clearly;
FIG. **16** is a bottom view of the apparatus of FIG. **15** with the blade holder, sipe blade and retainer plate shown;
FIG. **16A** is a cross-sectional view of the apparatus of FIG. **16** taken along line 16A-16A thereof;
FIG. **17** is a perspective view of an apparatus according to the fourth embodiment of the present invention that shows a sipe blade with blade holders that enable the sipe blade to blend into projections found on the curing plate;
FIG. **18** is an enlarged view of the apparatus of FIG. **17****;**
FIG. **19** is a top view of the apparatus of FIG. **17****;**
FIG. **19A** is a cross-sectional view of the apparatus of FIG. **19** taken along line 19A-19A thereof;
FIG. **19B** is a cross-sectional view of the apparatus of FIG. **19** taken along line 19B-19B thereof;
FIG. **19C** is a cross-sectional view of the apparatus of FIG. **19** taken along line 19C-19C thereof;
FIG. **20** is an exploded assembly view of the apparatus of FIG. **17****;** and
FIG. **21** is an exploded assembly view of the sipe blade and blade holders of the apparatus of FIG. **17****.**

### DETAILED DESCRIPTION OF PARTICULAR EMBODIMENTS

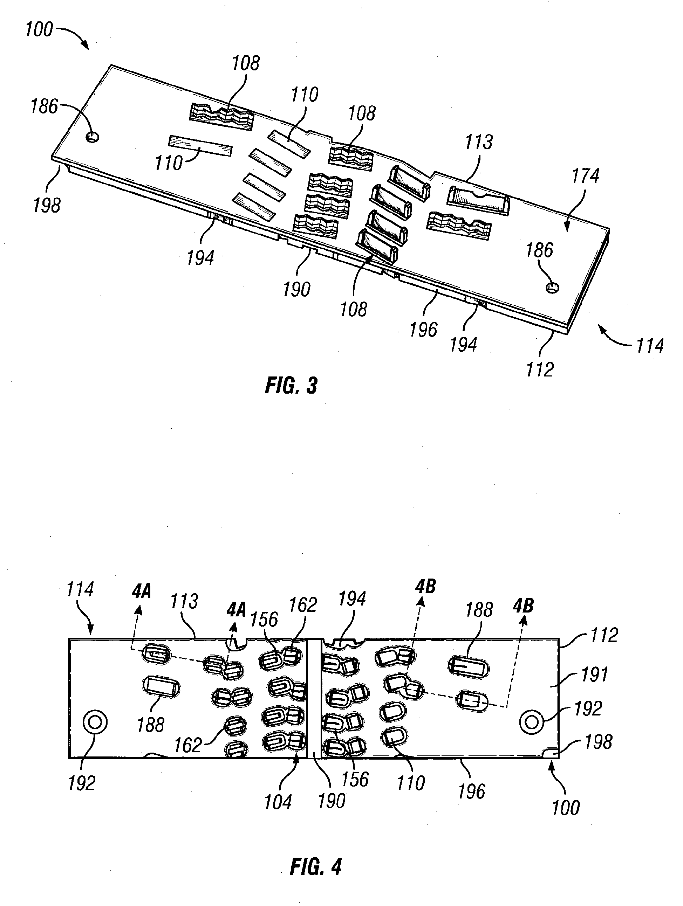

Looking at Figures **3** thru **6****,** there is shown the first embodiment of the present invention. It comprises, in part, a curing plate **100** with a series of apertures **102** that are configured to receive a subassembly **104** that includes a drawer or blade holder **106** and a sipe blade **108.** Alternatively, a dummy drawer or insert **110** may be placed into the aperture **102** so that no sipe blade **108** is found in that spot. Once the desired blade holders **106,** sipe blades **108,** and dummy inserts **110** have been properly placed, the retainer plate **112** is mounted onto the curing plate **100,** forming a plate subassembly **114** that can be inserted into a retread press to form a particular type of tire. Alternatively, the curing plate could be curved such as is common with a mold sector that is installed in a mold for forming new tires or retreading existing tires.

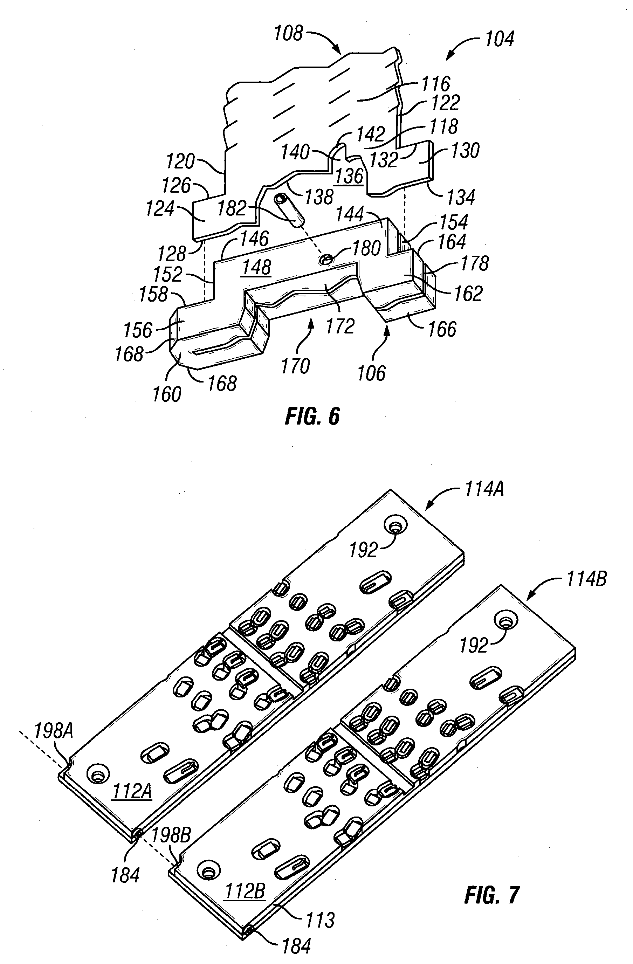

Focusing on Figure **6****,** the features and construction of the blade holder **106** and sipe blade **108** can be clearly seen. The sipe blade **108** is constructed from a thin piece of metal having an exemplary thickness of six tenths of a millimeter for truck tire applications but it is contemplated that this thickness could be less such as two tenths of a millimeter for car tire applications. The sipe blade has a first portion **116** that forms the sipe in the tire tread and a second portion **118** that is used to retain the blade **108** in the apparatus. This particular sipe blade **108** is a three dimensional sipe blade as its first portion **116** forms an undercut in the direction of draw while its second portion **118** varies only in a plane that is perpendicular to the direction of draw. The sipe blade **108** also has a first side surface **120** next to the first and second portions **116, 118** of the blade **108** and a second side surface **122** that is next to the first and second portions **116, 118** of the blade **108** and that faces in the opposite direction. A first heel **124,** with a top surface **126** and bottom surface **128,** is attached to the first side surface **120** next to the second portion **118** of the blade **108** and extends a predetermined distance away from the first side surface **120.**

Likewise, a second heel **130,** with a top surface **132** and bottom surface **134,** is attached to the second side surface **122** next to the second portion **118** of the blade **108** and extends a predetermined distance away from the second side surface **122.** The distance between the top and bottom surfaces **126, 128** of the first heel **124,** which defines the height of the first heel **124,** is the same as the distance between the top and bottom surfaces **132, 134** of the second heel **130,** which defines the height of the second heel **130.** Furthermore, the top surfaces **126, 132** of the heels **124, 130** are coplanar as are their bottom surfaces **128, 134.** A section **136** that is approximately centered on the second portion **118** of the blade **108** is removed, forming a clamp surface **138** that is coplanar with the top surfaces **126, 132** of the heels **124, 130.** A slot **140** that has a closed end **142** extends down vertically in the second portion **118** of the blade **108** and opens onto the clamp surface **138.** The slot **140** is positioned in an off-centered manner with respect to the body of the sipe blade **108.**

The sipe blade **108** is manufactured in the following manner. First, the lateral profile of the blade **108,** including the slot **140** is stamped using a die or burnt using a wire EDM. The two dimensional variation is then stamped onto both the first and second portions **116, 118** of the blade **108.** Finally, the three dimensional variation is stamped onto the first portion **116** of the blade **108** only. The last step is skipped when forming two dimensional sipe blades. Alternatively, the first and second portions **116, 118** of the blade **108** could have the two dimensional variation stamped onto them fist and the profiles could then be punched out or burnt using a wire EDM.

Sipe blades are typically made from stainless steel but may be made from other materials having the desired strength and durability. Furthermore, the shape and configuration of the sipe blade **108** may be altered and still fall within the scope of the present invention. For example, the size of the heels **124, 130,** their respective heights, and the distances they extend from the sipe blade **108** may be different from each other. The location and size of the section **136** removed from the second portion **118** of the blade **108** may also be changed so that clamp surface **138** is no longer coplanar with one or both of the top surfaces **126, 132** of the heels **124, 130** and so that the section **136** is no longer centered with respect to the body of the blade **108.** Also, the location of the slot **140** can vary across the width of the sipe blade **108** so that it does not open up onto the clamp surface **138** but onto another bottom surface of the sipe blade **108.** Furthermore, the first and second portions of the sipe blade may follow a curved path or have other shapes that are not straight.

The blade holder **106** has a main body **144** with a rectangular perimeter as viewed from its top or curing surface **146,** so called, because this surface **146** contacts the tire tread when installed in a retread press or mold sector and conducts heat to the rubber to vulcanize it. The perimeter of the main body **144** is defined, in part, by a front planar face **148** and a rear planar face **150** that are parallel and face in opposite directions. The distance between them constitutes the short dimension of the rectangular perimeter. The perimeter is also defined by a first planar side face **152** and a second planar side face **154** that are also parallel and face in opposite directions. The distance between them constitutes the long dimension of the rectangular perimeter. As a result of this geometry, the cross-section of the main body **144** is also rectangular. The perimeter is configured so that it will fit complimentarily and snugly within an aperture **102** of the curing plate **100** with less than six and a half hundredths of a millimeter clearance on average between the interior surface of the aperture **102** and the perimeter of the blade holder **106** to prevent flashing. A first heel **156,** with a top surface **158** and a bottom surface **160,** is attached to the main body **144** and extends a predetermined distance away from the first side surface **152.** A second heel **162,** with a top surface **164** and a bottom surface **166,** is attached to the main body **144** and extends a predetermined distance away from the second side surface **154.** The first heel **156** extends further away from the first side surface **152** than the second heel **162** extends away from the second side surface **154** and the vertical edges of both heels **156, 162** may have chamfers **168.** Some chamfers may exist for clearing other blade holders or sipe blades. Other chamfers exist to differentiate the blade holders so an assembler knows what orientation to install the blade holders for fool proofing before attaching the retaining member.

A gap **170** is located between the heels **156, 162,** which creates the bottom or clamp surface **172** of the main body **144** of the blade holder **106.** The top surfaces **158, 164** of the heels **156, 162** are coplanar with the clamp surface **172** and the bottoms surfaces **160, 166** of the heels **156, 162** are coplanar with each other. The distance between the curing surface **146** and clamp surface **172** of the blade holder **106** is the same as the thickness of the curing plate **100** so that the main body **144** of blade holder **106** is flush with the top and bottom surfaces **174, 176** of the curing plate **100.** When the blade holder **106** is inserted into the curing plate **100,** only the heels **156, 162** of the blade holder **106** extend past the bottom of the curing plate **100** with the top surfaces **158, 164** of the heels **156, 162** resting against the bottom surface **176** of the curing plate **100,** preventing the blade holder **106** from passing through the curing plate **100.**

A slit **178** is centrally located in the main body **144** and extends into the first heel **156** and completely through the second heel **162,** substantially creating a u-shaped body as viewed from the curing surface **146.** The shape of the slit **178** is complimentary to the second portion **118** of the sipe blade **108** so that the blade **108** can fit snugly within the slit **178.** Although the slit is shown to follow a substantially linear path, it is possible that its could follow a curved path such as when the first portion of the sipe blade is curved. Typically, the heels **124, 130** of the sipe blade **108** will be located within the heels **156, 162** of the blade holder **106** and will be at least partially coextensive with the heels **156, 162** of the blade holder **106.** This construction is advantageous because it allows the sipe blade/blade holder subassembly **104** to take up as little room as possible, maximizing the number of subassemblies **104** that can be located in close proximity to each other. A hole **180** penetrates the body **144** of the blade holder **106** and passes through the front and rear faces **148, 150** of the blade holder **106** as well as the slit **178.** A stop member in the form of a roll pin **182** can be inserted into the hole **180** so that it passes from one side of the slit **178** to the other. The roll pin **182** prevents any sipe blade **108** from being inserted into the slit **178** from underneath the blade holder **106.** Also, since the hole **180** is off-centered with respect to the body **144** of the blade holder **106** and the slot **140** of the sipe blade **108 is** also off-centered with respect to its body, the roll pin **182** will prevent the sipe blade **108** from being inserted into the blade holder **106** from above the blade holder **106** unless the slot **140** and the roll pin **182** are in alignment. This prevents the blade **108** from being inserted in a one hundred eighty degree reverse orientation about a vertical axis. This helps to ensure that the correct blade holder, sipe blade and orientation between these components are provided when assembling the sipe blade and blade holder subassembly **104.**

Of course, it is contemplated that the configuration of the blade holder **106** could be altered. For example, the dimensions of the heels **156, 162** such as their height and the distance they extend from the main body **144** of the blade holder **106** could be changed if so desired. Also, the location of the clamp surface **172** and the gap **170** that separates the heels **156, 162** could be varied so that the clamp surface **172** is not coplanar with the top surfaces **158, 164** of the heels **156, 162,** which may not be coplanar with each other. Likewise, the perimeter of the main body **144** of the blade holder **106** could be circular or curved and the cross-section could be something other than rectangular such as trapezoidal or conical. In addition, the hole **180** for the roll pin **182** may not be found above the clamp surface **172** but could be located above one of the bottom surfaces **160, 166** of the heels **156, 162.** The hole **180** also does not need to have a round configuration but could have a square shape. Similarly, the stop member does not have to be a roll pin **182** but could be a small cap screw. In such a case, a counterbore could be located on the front or rear surfaces **148, 150** of the blade holder **106** concentric with the hole **180.** The hole **180** could be tapped so that the cap screw could be screwed into the blade holder **106** with its head being flush to recessed compared to the front or rear faces **148, 150** of the blade holder **106.** Also, the top or curing surface **146** of the blade holder **106** is flat in a retread application, but could be concave to match the curing surface of a mold sector in a molding application. Accordingly, all of these variations are within the scope of the present invention.

It should be noted that the use of a stop member, hole **180** for receiving the stop member on the blade holder **106,** and the slot **140** on the blade **108** are only desirable if the blade **108** is asymmetrical and it is desired to prevent the apparatus from being misassembled. In situations where the blade **108** is symmetrical, these features may be omitted. Therefore, variations lacking these features are also within the scope of the present invention. Alternatively, the shape of the sipe blade **108** in its second portion **118** could be used to prevent misassembly. In situations where two differently configured sipe blades have identical two dimensional characteristics so that they both can fit within a slit **178** of the blade holder, the hole **180** and stop member could be used to prevent improper assembly of the sipe blade and blade holder.

The blade holder **106** can be manufactured from plate stock of 1020 carbon steel in the following way. The thickness of the plate stock is ground to the proper thickness, forming the front and rear surfaces **148, 150** of the blade holder **106.** The profile of the heels **156, 162,** clamp surface **172,** side surfaces **152, 154 and** curing surface **146** of the blade holder **106** is then machined using a wire EDM process. Finally, the wire start hole is drilled into the block adjacent to the location of the finished dimension of the second heel **162** so that its central axis is parallel to the draw direction of blade **108.** Then the slit **178** is machined using a wire EDM process and the portion of the block that has the wire start hole in it is cut off, forming the body of the blade holder **106** with the slit **178** extending completely through the second heel **162.** This construction is particularly advantageous because it eases manufacturing the blade holder **106** and removes the wire start hole which could be a source of flash. Alternatively, the profile of the blade holder could be milled.

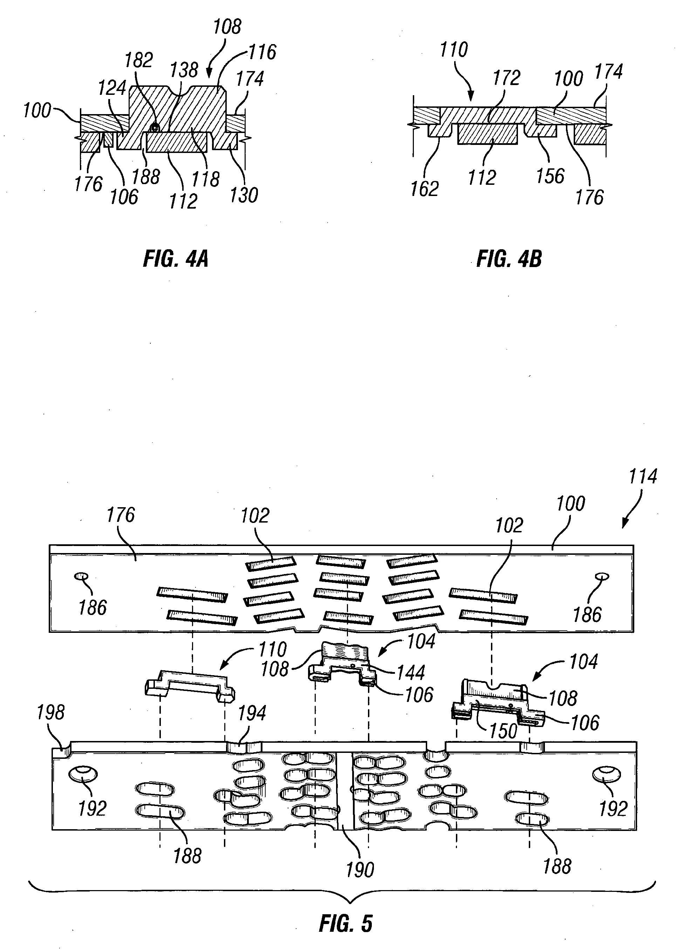

Looking at Figures **3** and **5****,** the dummy insert **110** can be clearly seen. Its construction in geometry and material is essentially the same as the blade holder **106** except that it lacks a slit **178** for receiving the blade **108** and a hole **180** for receiving the stop member. These features are not necessary since the dummy insert **110** does not receive a sipe blade **108** but is intended to fill one of the apertures **102** of the curing plate **100** temporarily to eliminate the presence of a sipe blade **108.** Of course, this dummy insert **110** can be replaced with a blade holder and sipe blade subassembly **104** with a desired configuration at any time. This component thereby adds to the flexibility and modularity of the present invention but it is contemplated that a dummy insert **110** may not be necessary for all applications.

Figures **3, 4****,** **5** and **7** also show the construction of the curing plate **100** and retainer plate **112.** As stated previously, the curing plate **100** comprises a rectangular shaped plate with a plurality of apertures **102** for receiving the blade holder and sipe blade subassemblies **104** and/or dummy inserts **110.** The curing plate **100** also has at least two tapped holes **186** and two asymmetrically placed dowel pin holes (not shown). The retainer plate **112** is also a rectangular shaped plate that has the same outer dimensions as the curing plate **100,** or is slightly smaller for clearance, and that also has a series of clearance holes **188.** It also has a keyway **190** on its bottom surface **191,** at least two screw counterbores **192,** and two asymmetrically placed dowel pin holes (not shown) that are capable of aligning with the dowel pin holes of the curing plate **100.** There are also some cutouts **194** in the front face **196** of the plate that allow one plate subassembly **114** with dummy inserts **110** or blade holders **106** that are closely situated to the edge of a curing plate **100** such that their heels **156, 162** extend past the plate **100** to fit within these cutouts so that there is no interference and both plate subassemblies **114** can be installed on a retread press or in a mold. The front face **196** also has a notch **198** found at its one comer and a bolt **184** that is located in linear alignment on the rear face **113** with the notch **198.** Although both plates **100, 112** are flat in a retreading application, it is contemplated that they could have other configurations such as curved or concave for a molding application.

Looking now at Figures **5 - 7****,** the method of assembling the first embodiment is clearly depicted. First, the roll pin **182** is inserted into the hole **180** of blade holder **106** such that it passes through the slit **178.** Since the roll pin **182** is slightly larger than the size of the hole **180,** the pin **182** needs to be slightly compressed, which is easily done due to its split construction, so it can be installed into the hole **180.** Once in the hole **180,** the pin **182** expands producing friction that keeps the roll pin **182** in the hole **180** unless it is pressed back out of the hole **180** purposely. Second, the sipe blade **108** is inserted from above the blade holder **106** with its slot **140** in linear alignment with the roll pin **182** until the sipe blade **108** enters the slit **178** of the blade holder **106.** This movement continues until the closed end **142** of the slot **140** of the sipe blade **108** bottoms out onto the roll pin **182.** This is usually done with the sipe blade **108** facing upward in a vertical direction so that gravity holds the blade **108** in the blade holder **106,** retaining the blade **108** and blade holder **106** as a subassembly **104.** Next, this subassembly **104** is inserted into the appropriate aperture **102** of the curing plate **100** with the first heel **156** of the blade holder **106** pointing in a desired direction. This step is repeated until all the apertures **102** of the curing plate **100** are filled with a sipe blade/ blade holder subassembly **104** or dummy insert **110.** Note that it is possible for the assembler to insert the first row of subassemblies with the first heel pointing in the wrong direction which is revealed when assembling the retaining plate as will be discussed in more detail later.

Once a first set of blade holder/sipe blade subassemblies **104** and dummy inserts **110** have been installed in a row with their first heel **156** pointing in a particular direction, all holder/sipe blade subassemblies **104** and dummy inserts **110** in an adjacent row must have their second heel **162** pointed toward the first heel **156** of the adjacent blade holder/sipe blade subassembly **104** or dummy insert **110** or their heels will interfere preventing the second blade holder/sipe blade subassembly **104** or dummy insert **110** from being installed. In other words, one aperture **102** of the first row of the curing plate **100** is sufficiently close to the second aperture **102** of the second row of the curing plate **100** or mold sector so that two adjacent blade holders **106** or dummy inserts **110** cannot be placed within these apertures **102** with their first heels **156** being closest to the adjacent aperture **102.** This is true because the first heels **156** extend further from the body **144** of the blade holder **106** or dummy insert **110** than the second heel **162** and will interfere with each other if they are placed next to each other. Thus, the assembler is forced to reverse the orientation of the second blade holder **106.** After being installed into the curing plate **100** or mold sector, the heels of the blade holders **106,** sipe blades **108** and dummy inserts **110** prevent their respective components from passing through the curing plate **100** or mold sector. Then the curing plate **100** or mold sector, blade holders **106,** sipe blades **108,** and dummy inserts **110** are inverted so that their heels are exposed.

The retainer plate **112** is then placed over the curing plate **100** with its keyway **190** facing upward so that the dowel pins (not shown) that are found within the dowel pin holes of the retainer plate **112** align with dowel pin holes of the curing plate 100. At the same time, the clearance holes **188** of the retainer plate **112** align with the heels of the components inserted into the curing plate **.100** and clear them allowing the retainer plate **112** to be screwed onto the curing plate **100.** The chamfers **168** found on the heels **156, 162** of the blade holders **106** or dummy inserts **110** help ensure this clearance. The retainer plate **112** now presses onto the clamp surfaces **138, 172** of the components preventing them from falling out of the curing plate **100.** The retainer plate **112** is then screwed onto the curing plate **100.**

At this point, it is possible that retainer plate **112** cannot be screwed onto the curing plate **100** or mold sector because the clearance holes **188** do not clear the heels of the components already installed into the curing plate **100** or mold sector because they were installed incorrectly. This happens when the initial blade holder/sipe blade subassemblies **104** or dummy inserts **110** were installed in the wrong orientation which then repeated itself with the subsequently installed subassemblies **104** or dummy inserts **110.** In such a case, it is necessary to reinstall all the blade holder/sipe blade subassemblies **104** or dummy inserts **110** by reversing their orientation by one hundred eighty degrees about a vertical axis. The retainer plate **112** can then be mounted as described above. This potential problem is prevented when every sipe blade and blade holder subassembly or dummy insert is designed asymmetrically and can fit into an aperture of the curing plate or mold sector in only one orientation as will be described later regarding the second embodiment of the invention.

The last step is then to install the plate subassembly **114** with the sipe blades **108,** blade holders **106,** and dummy inserts **110** into a retread press or mold. This is accomplished by sliding the plate subassembly **114** onto a key (not shown) within the guide rails (not shown) found on the retread press or mold and sliding it until it bottoms out on the rear of the retread press or is positioned properly within a mold. Then another plate subassembly **114** is installed into the retread press or mold in like manner so that its notch **198** will receive the bolt of the adjacent subassembly **114** (see Figure 7). This prevents the plate subassembly **114** from being inadvertently reversed in a one hundred eighty degree orientation about a vertical axis. This step is repeated until all of the plate subassemblies **114** have been loaded into the press or mold and locked into the place. The press or mold is now ready to emboss the desired geometry on a tread stock.

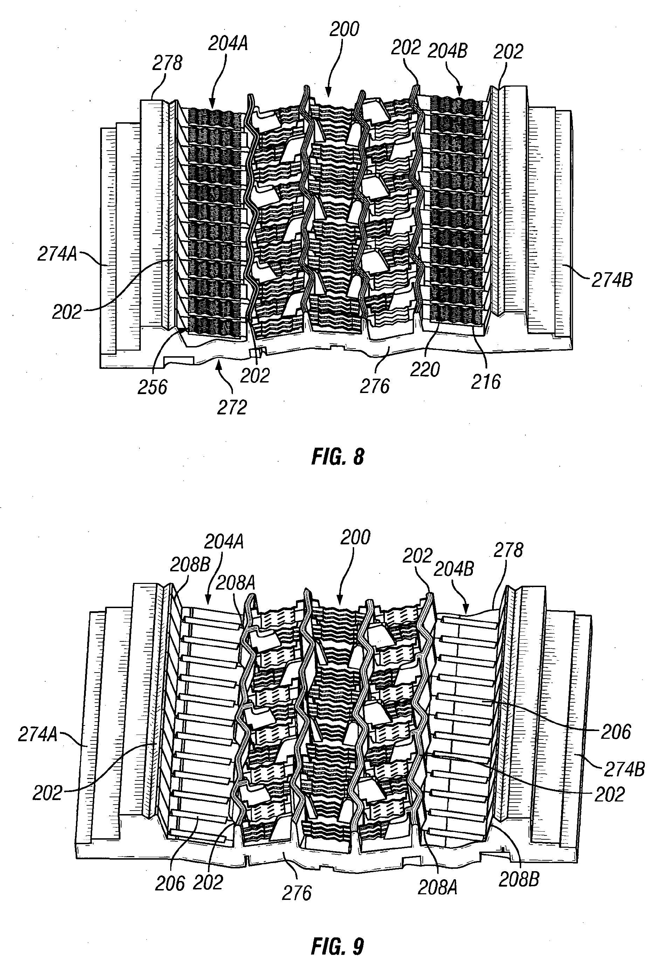

In some tire applications, a sipe that has three dimensional characteristics in its midportion has two dimensional characteristics on either side of the midportion that blends into a recess or groove on a tread stock. A sipe blade that forms such a geometry would therefore need to have a three dimensional configuration in its midportion **201** and a two dimensional configuration on either side of the midportion **201** that blends into raised projections **202** that are found on the curing plate **200** or mold sector. Inviting your attention to Figures **8** thru **14****,** the second embodiment, which addresses this situation, is shown in the outer rows **204** of the curing plate **200.** Its construction in geometry and material is essentially the same as that of the first embodiment and can be used with a flat curing plate in a retread press or can be curved with a concaved curing surface in a molding application. However, its construction differs from the first embodiment in the following ways.

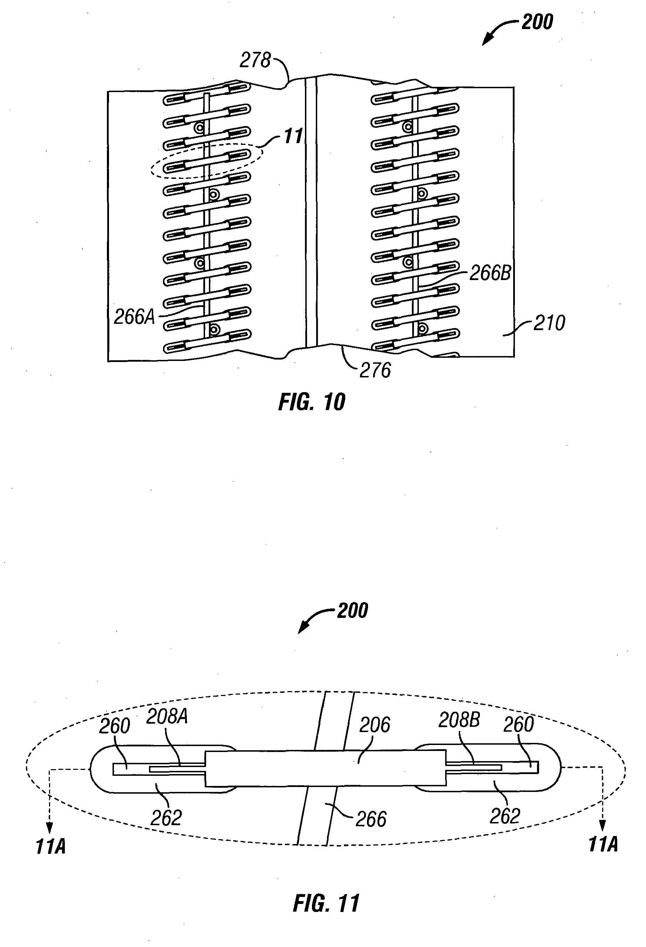

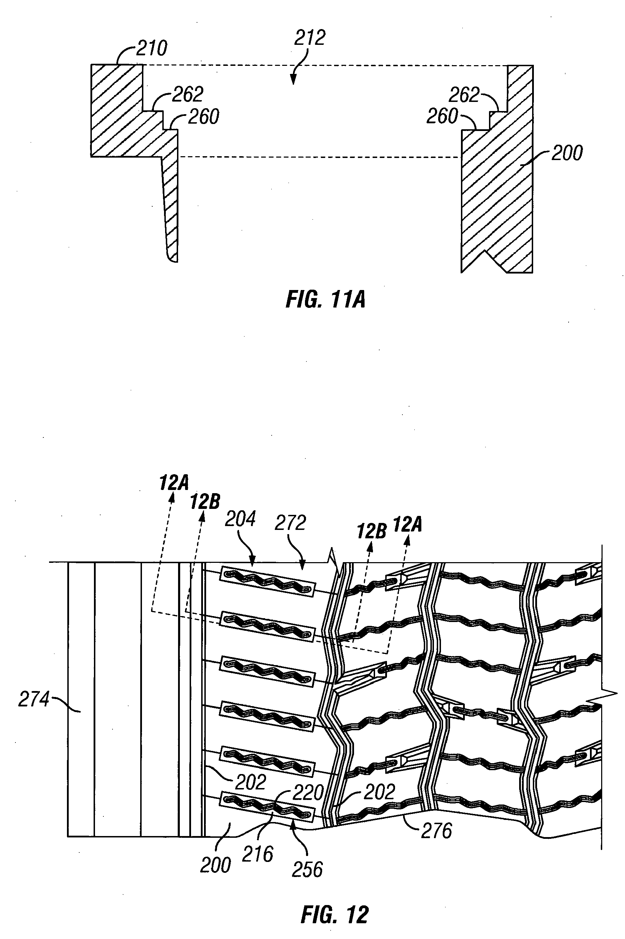

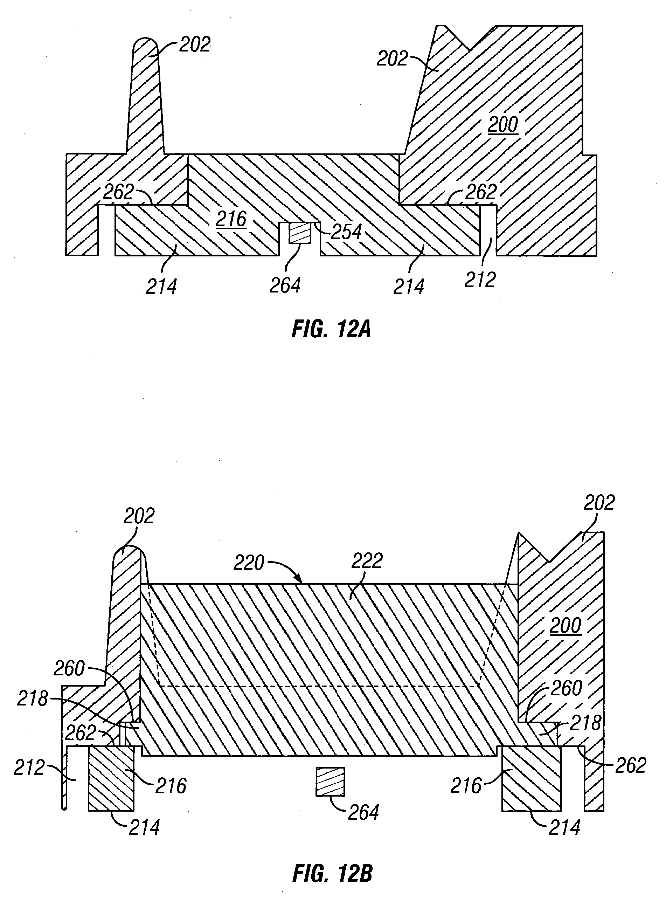

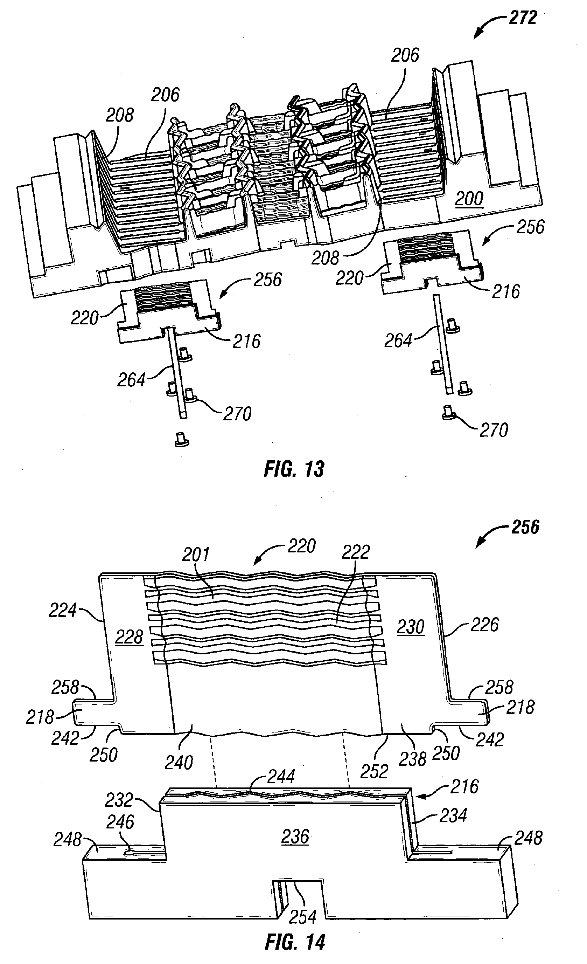

First as shown by Figures **9** and **13****,** the aperture **206** in the curing plate **200** or mold sector is not simply rectangular but has two slits, a short slit **208a** and a long slit **208b** that extend from its sides in a direction that is parallel to the long dimension of the aperture **206.** The slits **208** are located along the midplane of the aperture **206** and extend into the raised projections **202** found on the curing plate **200** or mold sector on each side of the aperture **206.** It is also contemplated that the slit could be located in other places than the midplane of the aperture and that it does not have to be parallel to the long dimension of the aperture. The bottom surface **210** of the curing plate **200** or mold sector has a stepped cavity **212** that is machined by milling and is configured to receive the heels **214** of the blade holder **216** at one level and the heels **218** of the blade **220** at another level (see Figures **11A****,** **12A** and **12B**). Second, the sipe blade **220** does not have a three dimensional configuration along the entire width of its first portion **222** but only in the middle **201** of the first portion **222.** The blade has two dimensional characteristics on either side of the middle portion **201** that extend all the way to the first and second side surfaces **224, 226.** Also as shown by Figure **14****,** the length of the first two dimensional portion **228** or the distance it extends from the three dimensional portion **201** is less than the length of the second two dimensional portion **230** or the distance it extends from the three dimensional portion **201.** Third, the first side surface **224** of the sipe blade **220** extends past the first side surface **232** of the blade holder **216** and the second side surface **226** of the sipe blade **220** extends past the second side surface **234** of the blade holder **216** while the main body **236** of the blade holder **216** is wider than the width of the three dimensional part **201** of the first portion **222** of the sipe blade **220** such that the entire three dimensional portion **201** of the sipe blade **220** is above the main body **236** of the blade holder **216.** Furthermore, the sipe blade **220** lacks a clamp surface but instead has a short tab **238** that extends off the bottom of the second portion **240** of the sipe blade **220** next to the bottom surfaces **242** of the heels **218** of the sipe blade **220.**

Fool proofing characteristics found in the first embodiment such as the stop member, hole **180** for receiving the stop member on the blade holder **106,** and the slot **140** on the sipe blade **108** are omitted since the blade is asymmetrical and the second two dimensional portion **230** cannot fit into the shorter slit **208a** in the curing plate **200** or mold sector because of the distance the second two dimensional portion **230** extends from the second side surface **234** of the blade holder **216,** which cannot be varied as the position of the blade **220** is fixed laterally with respect to the blade holder **216** as will be described later. This means it can be inserted into the curing plate **200** or mold sector only one way. In addition, the blade holder **216** is symmetrical with the first and second heels **214** extending the same distance from the main body **236** since the blade holder **216** is no longer relied upon to foolproof the assembly of the sipe blade **220** into the curing plate **200** or mold sector, although it is contemplated that differentiating the length and/or height of the heels could be used to fool proof assembly if desired. Also as shown by Figure **13****,** the slit **244** does not extend completely through either heel and a wire start hole **246** is present in the first heel at the beginning of the slit **244** allowing the blade holder **216** to be made by a wire EDM process in a conventional manner. This is possible since the wire start hole **246** is not located near the curing surfaces of the apparatus. When the sipe blade **220** is inserted into the slit **244** of the blade holder **216,** the blade **220** slides down until the bottom surfaces **242** of the heels **218** of the blade **220** rests on the top surfaces **248** of the heels **214** of the blade holder **216** and the tab **238** is found below these top surfaces **248** and is partially contained within the heels **214** of the blade holder **216**. There is clearance between the side surfaces **250** of the tab **238** and the sides of the slit **244** of the blade holder **216** as the undulations of the second portion **240** of the blade **220** locate the blade **220** laterally within the slit **244** of the blade holder **216** (see Figure **14**). It should be noted that the bottom surface **252** of the tab **238** is above the clamping surface **254** of the blade holder **216** since the blade holder **216** presses against the blade **220** to hold it into position (see Figure **12B**).

Once a blade holder/sipe blade subassembly **256** according to the second embodiment has been assembled, it is inserted into a curing plate **200** or mold sector such that the top surfaces **258** of the heels **218** of the blade **220** rest upon the top surface **260** of the stepped pocket **212** while the top surfaces **248** of the heels **214** of the blade holder **216** rest upon the intermediate surface **262** of the stepped pocket **212** which prevents the sipe blade **220** and blade holder **216** from passing through the curing plate **200** or mold sector. At this time, instead of just having the blade holder **220** fill the aperture **206** of the curing plate **200** or mold sector as with the first embodiment, the extremities of the sipe blade **220** fill up the slits **208** on either side of the aperture **206** and fill any void created by the slits **208** in the projections **202** of the curing plate **200** or mold sector. Thus, the sipe blade provides a three dimensional configuration with undercuts where desired and then transitions into a two dimensional configuration without undercuts that then blends into a projection. Next, a long retaining element **264** is placed into a slot **266** that is milled onto the bottom **210** of the curing plate **200** or mold sector and placed therein, pressing onto the clamp surfaces **254** of the blade holder(s) **216.** The retaining element **264,** blade holders **216** and blades **220** are held onto the curing plate **200** or mold sector using cap screws **270.** This plate subassembly **272** is then loaded into a retread press or mold using the ears **274** found on each side of the curing plate **200** in like manner as described above for the first embodiment except that no notches or bolts are used to prevent misassembling the apparatus since the front surface **276** of the curing plate **200** is contoured so that the next plate subassembly **272** must have a rear face **278** with a complimentary shape or the subassemblies will not mate properly, alerting the assembler that something is awry.

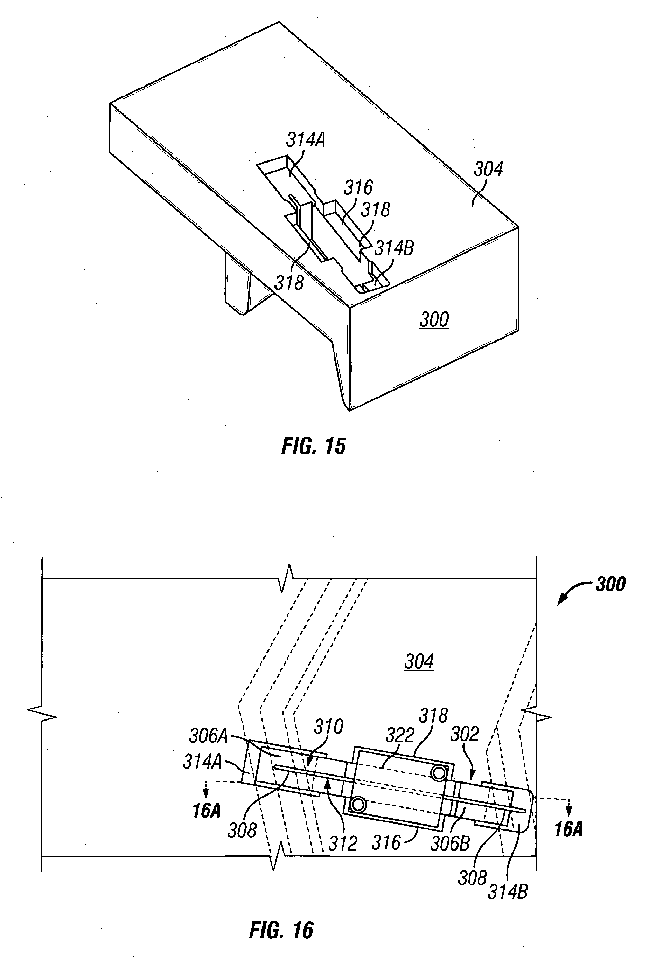

In other applications, there may be few blade holder/sipe blade subassemblies that are inserted into the curing plate or mold sector. This may make it unnecessary and undesirable due to cost to create a larger retainer plate **112** or long retaining element **215.** In other situations, the relative positions of the blade holder/sipe blade subassemblies may not be compatible with a single long retaining element. Figures **15** thru **17** show a third embodiment of the present invention which addresses these situations. In this embodiment, the construction of the blade holder/sipe blade subassembly **302** is similar to either of the first two embodiments described herein. However, the curing plate **300** or mold sector is thicker like the second embodiment so that its bottom surface **304** extends to the bottom surfaces of the heels **306, 308** of the blade holder **310** and sipe blade **312.** The bottom surface **304** of the curing plate **300** or mold sector defmes two heel pockets **314** that receive the heels **306** of the blade holder **310,** sipe blade **312** or dummy insert (not shown). The heel pockets **314** are configured so that the first heel **306a** of the blade holder **310** or dummy insert cannot fit within the smaller pocket **314b,** helping to ensure that the blade holder/sipe blade subassembly **302** will be inserted into the curing plate **300** or mold sector in only one orientation. It also defines a cavity **316** that has a top surface **318** that is adjacent to and coplanar with as many of the clamping surfaces **320** of the blade holder **310,** sipe blade **312,** or dummy insert as possible. A retainer member **322** in the form of a small rectangular shaped plate fits within this cavity **316** and between the heels of these components, which are seated in the curing plate **300** or mold sector, and presses onto the clamp surfaces **320** of these components. The retainer member **322** is then screwed to the curing plate **300** or mold sector, preventing the components from falling out of the curing plate **300** or mold sector.

It is contemplated that fool proofing the assembly for this embodiment could be achieved by carefully choosing the size, shape and placement of the retainer member **322** in conjunction with the size and position of the cavity **316** and clamp surfaces of the blade holder **310** and sipe blade **312.**

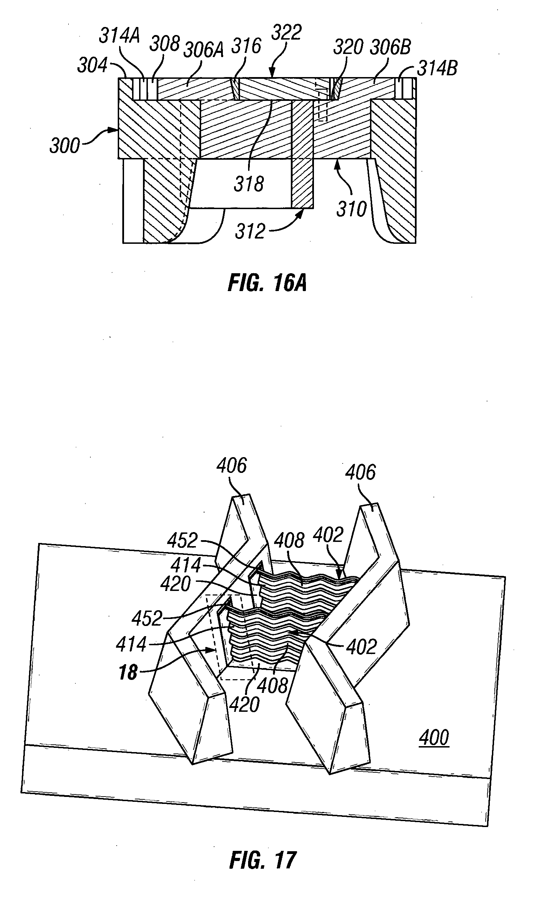

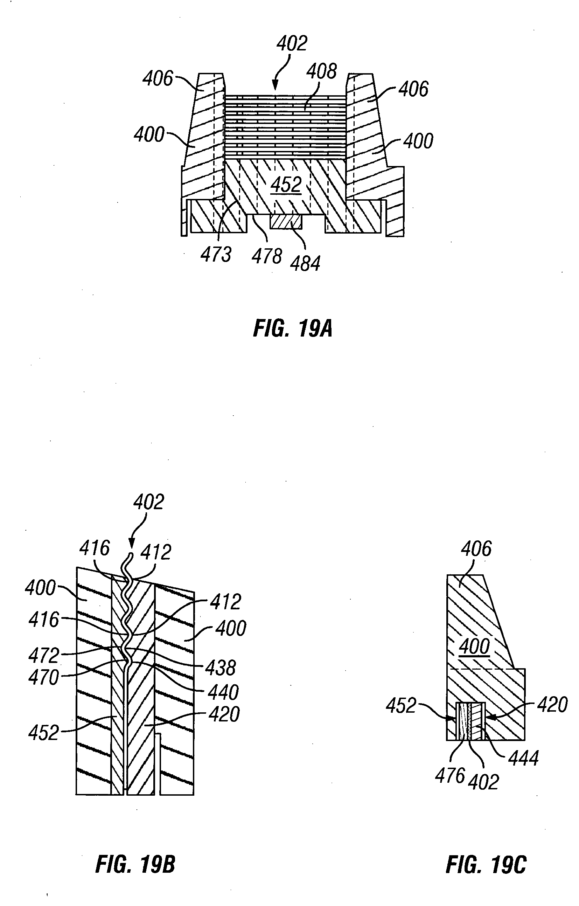

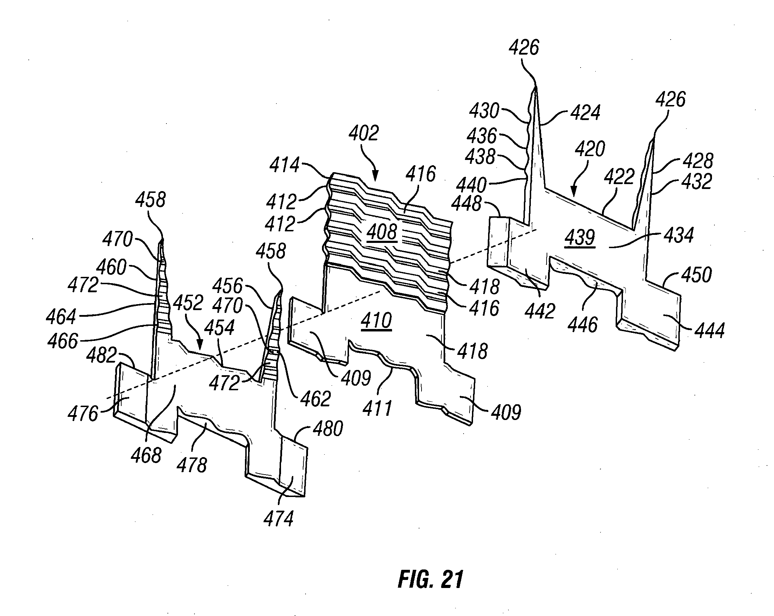

Yet another application for which there has not been a suitable solution is when a three dimensional sipe blends into a recess or groove of a tire tread. The fourth embodiment depicted by Figures **17** thru **21** presents a suitable way of providing means for replacing a three dimensional sipe blade **402** with an undercut in its first portion **408** that can be inserted into a curing plate **400** or mold sector that has an aperture **404** that extends into a pair of projections **406,** allowing the sipe blade **402** to effectively blend into the projections **406.** It comprises, in part as best shown in Figure **21****,** a sipe blade **402** that has essentially the same configuration as the sipe blade **108** of the first embodiment including heels **409** and a clamp surface **411** except that a slot **140** is omitted since the blade **402** is symmetrical and fool proofing for assembly is not necessary. Instead, the heel height of the sipe blade **402** could be used for fool proofing to make sure that one blade of symmetrical construction is not inadvertently substituted for another blade of symmetrical construction. Furthermore, the second portion **410** of the blade **402** is not necessarily used to retain the blade **402** within the apparatus but could be simply contained within the apparatus for reasons that will be explained later. As can be seen, the first portion **408** has geometry that varies both in a plane that is parallel to the direction of draw and in a plane that is perpendicular to the direction of draw. The variations exist across the entire width of the first portion **408** of the sipe blade **402.** These variations comprise a series of undercuts that have a male portion **412** on the front surface **414** of the sipe blade **402** and a female portion **416** directly opposite of the male portion **412** on the rear surface **418** of the sipe blade **402.** These undercuts are wavy so that the male and female portions **412, 416** alternate on both the front and rear surfaces **414, 418.** It is contemplated that this embodiment can be altered to accommodate other configurations of sipe blades that are not wavy, such as tear drop shaped blades or blades having rectangular shaped cross-sections or other shapes with abrupt angles.

Again as best shown in Figure **21****,** this embodiment also includes a first blade holder **420** that has a body with a bottom curing surface **422** and a first spire **424** that rises from the bottom curing surface **422** to a top curing surface **426** and a second spire **428** that rises from the bottom curing surface **422** to a top curing surface **426.** These surfaces are called curing surfaces because once installed in a retread press or mold, the bottom curing surface forms the top surface of the tread and conducts heat to it for curing while the top curing surface forms a part of the bottom of a groove or other depression found on the tread and conducts heat there for curing. Both spires **424, 428** are located at the extremities of the top portion of the first blade holder **420** and form a portion of the first side surface **430** and second side surface **432** of the first blade holder **420.** The front surface **434** of the blade holder **420** is configured to mate with the interior surface of the aperture **404** of the curing plate **400** while the rear surface **436** has alternating male and female portions **438, 440** along the spires **424, 428** that mate with male and female portions **412, 416** of the sipe blade **402.** The first blade holder **420** also has a bottom portion **439** for retaining the blade holder **420** in the apparatus that has a first heel and a second heel **442, 444** that are separated by a gap that defines the clamp surface **446** that is coplanar with the top surfaces **448, 450** of the heels **442, 444.** This bottom portion **439** is also wavy in a plane that is perpendicular to the direction of draw so that it can mate properly with the second portion **410** of the sipe blade **402.**

A second blade holder **452** is also provided that has a body with a bottom curing surface **454** and a first spire **456** that rises from the bottom curing surface **454** to a top curing surface **458** and a second spire **460** that rises from the bottom curing surface **454** to a top curing surface **458.** Both spires **456, 460** are located at the extremities of the top portion of the second blade holder **452** and form a portion of the first side surface **462** and second side surface **464** of the second blade holder **452.** The front surface **466** of the second blade holder **452** is configured to mate with the interior surface of the aperture **404** of the curing plate **400** while the rear surface **468** has alternating male and female portions **470, 472** along the spires **456, 460** that mate with male and female portions **412, 416** of the sipe blade **402.** The second blade holder **452** also has a bottom portion **473** for retaining the blade holder **452** in the apparatus that has a first heel **474** and a second heel **476** that are separated by a gap that defines the clamp surface **478** that is coplanar with the top surfaces **480, 482** of the heels **474, 476.** This bottom portion **473** is also wavy so that it will match with the second portion **410** of the sipe blade **402.** The second blade holder **452** may have an identical configuration to that of the first blade holder **420.**

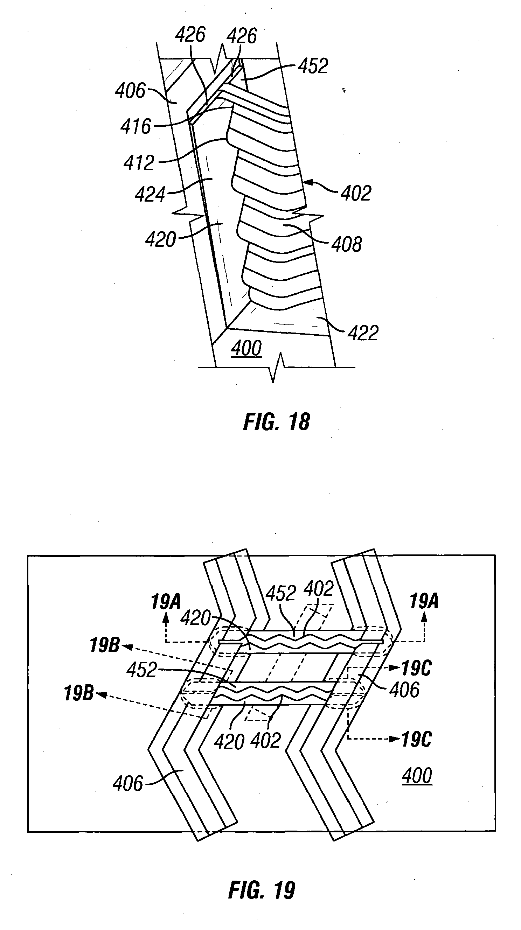

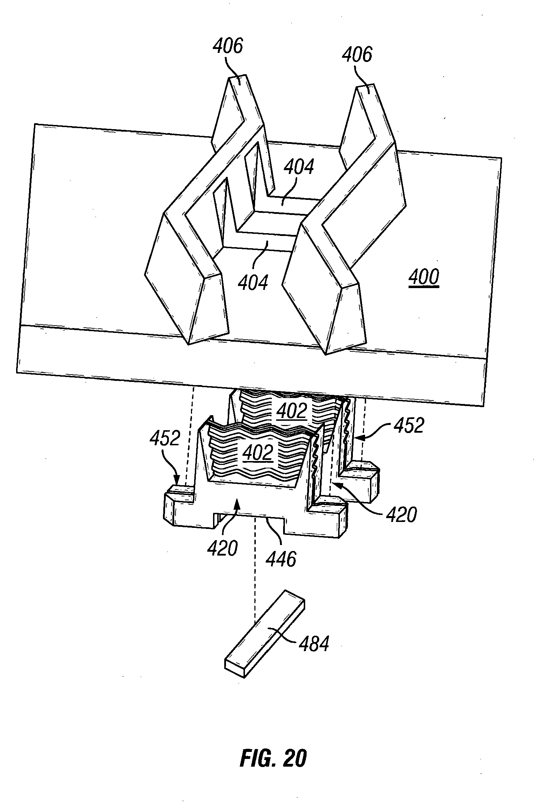

This embodiment of the invention is assembled as follows. First, the first blade holder **420** is pressed with its rear surface **436** contacting the rear surface **418** of the sipe blade **402** such that the male and female portions **438, 440** of its spires **424, 428** mate with the complimentary shaped male and female portions **412, 416** of the sipe blade **402.** Second, the second blade holder **452 is** pressed with its rear surface **468** contacting the front surface **414** of the sipe blade **402** such that the male and female portions **470, 472** of its spires **456, 460** mate with the complimentary shaped male and female portions **412, 416** of the sipe blade **402** with the spires found next to each other on either side of the sipe blade. The mating of these components creates a blending of the sipe blade **402** into the blade holders **420, 452** that is free of gaps that could allow rubber to flash into them. Also, the sipe blade **402** cannot move in the draw and anti-draw directions with respect to the blade holders **420, 452** as all three components are interlocked. This could be used as the sole means for retaining the sipe blade in the apparatus. At the same time, the bottom portions **439, 473** of the blade holders **420, 452** also mate closely with the second portion **410** of the sipe blade **402** so that no rubber can flash down in between the components. Next as shown by Figure **20****,** all three components are inserted into the aperture **404** of the curing plate **400** or mold sector, filling the gaps found in the projections **406** of the curing plate **400** or mold sector created by the aperture **406,** allowing the sipe blade **402** to effectively blend into these projections **406** (see Figures **17** and **18**). At this point, the curing plate **400** or mold sector holds the blade holders **420, 452** and sipe blade **402** together. Finally, a retainer plate **484** is used to hold these components in the curing plate **400** or mold sector as previously described for the other embodiments.

Of course, it is contemplated that the blade holders and sipe blade used in this embodiment of the invention could have different configurations. The sipe blade could have a different configuration than the wavy shape shown and could lack heels. In like fashion, the blade holders could have different numbers and shapes of spires. For example, the blade holders could have a single spire that is situated in their middle portion and this spire could be much wider than shown in the drawings contained herein. Also, the top and bottom curing surfaces could be angled, flat or could be something other than planar. Finally, the sipe blade and blade holders could be held in the apparatus by other means than heels known in the art such as being screwed in place or if heels are used, they could be changed so that the heels of the blade holders and sipe blade are not coextensive. Also, no fool proofing is provided in this example of the fourth embodiment but fool proofing techniques described above could be used if applicable. In addition, the blade and holders may be curved instead of straight. Therefore, these other variations are also considered to be within the scope of the present invention.

The sipe blades **408** can be manufactured as previously described for other embodiments while the blade holders **420, 452** can have the profile made using a wire EDM process with the wavy areas burnt thereon using an electrode via an EDM process. Alternatively, the wavy areas could be milled onto the blade holders **420, 452.**

All of the features of the embodiments described above may be used alone or in combination to provide an apparatus that it can be used to mold or retread tires with sipe blades that have different configurations including two or three dimensional. They also provide a way to assemble and disassemble such an apparatus including the following steps. The first step would be to provide a curing member such as a plate or mold sector that has a curing surface and a bottom surface and an aperture that extends through both surfaces, a blade holder that has a curing or top surface and a slit, and a sipe blade that has a first portion for forming or molding a sipe in a tread stock of a tire and a second portion that fits within the slit of the blade holder. Another step is to insert the sipe blade into the blade holder through the curing surface of the blade holder so that the second portion is located within the slit of the blade holder. This is particularly advantageous as this allows the blade holder to hold either two or three dimensional sipe blades as three dimensional sipe blades cannot be inserted through the bottom of a blade holder as this would require the slit to be too large, leaving a gap between the blade holder and sipe blade that would be susceptible to flash when the sipe blade and blade holder are assembled. Yet another step is to insert the blade holder and sipe blade through the bottom surface of the curing member into its aperture until the sipe blade and blade holder are seated within the curing member. The sipe blade and blade holder are then retained in the curing member. The apparatus may be disassembled by reversing the above steps.

Retaining the sipe blade and blade holder in the curing member may be accomplished by providing a retainer member such as a plate that contacts the blade holder and holds it within the curing member. The retainer member may be held onto the curing member using a fastener such as a cap screw. In addition, the retainer member may also contact the sipe blade and hold it within the curing member. Also, the blade holder may be held in the apparatus using cap screws that engage both the blade holder and retainer member. As stated previously, the retainer and curing members may have any desired shape including curved and straight and their top or bottom surfaces may be flat, concave, or any other desired shape. In certain instances, the assembly of the apparatus may be fool proofed so that the sipe blade can be inserted into the curing member in only one orientation and/or may be inserted into the blade holder in only one orientation. Also, the assembly of the curing member, sipe blade, blade holder and retainer member subassembly into an apparatus may be fool proofed so that it will be installed in only one orientation. Also, means for visually indicating to an assembler that the components are being assembled incorrectly or correctly may be provided, alerting the assembler if he/she is assembling the apparatus correctly.

As can be seen, the apparatus and method of assembling the apparatus in accordance with the embodiments described herein provides a system for changing sipe blades with one configuration to another configuration, accommodating both two and three dimensional sipe blades, as well as for eliminating the presence of a sipe blade by using a dummy insert. It also helps to ensure that the correct sipe blade configuration is created preventing mold and press crashing as well as production scrap. Hence, certain embodiments of the present invention satisfy the needs mentioned earlier.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention. The foregoing description is provided for the purpose of illustration only and should not be construed in a limiting sense. Only the language of the following claims should limit the scope of this invention.

## Claims

1. An apparatus for molding or retreading a tire having sipes in its tread stock that facilitates sipe replacement comprising:
a curing member (100, 200, 300, 400) that has a top surface that contacts the tread of the tire and a bottom surface, said surfaces defining a first aperture;
a blade holder (106, 216, 220, 310, 420) that is configured to fit within the first aperture of the curing member (100, 200, 300, 400), said blade holder (106, 216, 220, 310, 420) having a top surface that contacts the tire tread and a body that defines a slit that has a predetermined configuration, said blade holder (106, 216, 220, 310, 420) also having a heel with a top surface contacting the curing member (100,200, 300, 400) and a bottom surface; and
a sipe blade (108, 220, 312, 402) that has a first portion (116) for forming a sipe in the tire tread and a second portion (118) for retaining the blade within the apparatus comprising a heel with a top surface and a bottom surface, said second portion (118) having a shape that is complimentary to the slit of the blade holder (106, 216, 220, 310, 420) so that the sipe blade (108, 220, 312, 402) can fit within the blade holder (106, 216, 220, 310, 420).

2. The apparatus of claim 1 wherein said slit of the blade holder (106, 216, 220, 310, 420) extends into the heel of the blade holder (106, 216, 220, 310, 420).

3. The apparatus of claim 2 wherein said second portion (118) of the sipe blade (108, 220, 312, 402) is at least partially located within the heel of the blade holder (106, 216, 220, 310, 420) and the top surfaces of the heels of the blade holder (106, 216, 220, 310, 420) and sipe blade (108 are coplanar and contact the curing member (100, 200, 300, 400).

4. The apparatus of claim 2 wherein the bottom surface of the heel of the sipe blade (108, 220, 312, 402) rests upon the top surface of the heel of the blade holder (106, 216, 220, 310, 420).

5. The apparatus of claim 3 wherein the blade holder (106, 216, 220, 310, 420) comprises a clamp surface (172) that is found above the bottom surface of its heel and the sipe blade (108, 220, 312,402) also has a clamp surface that is found above the bottom surface of its heel.

6. The apparatus of claim 5 wherein the clamp surfaces of the blade holder (106, 216, 220, 310, 420) and sipe blade (108, 220, 312, 402) are coplanar.

7. The apparatus of claim 6 wherein the clamp surfaces (172) of the blade holder (106, 216, 220, 310, 420) and sipe blade (108, 220, 312, 402) are coplanar with the top surfaces of the heels of the blade holder (106, 216, 220, 310, 420) and sipe blade (108, 220, 312, 402) and wherein the distance from the top surface of the blade holder (106, 216, 220, 310, 420) to its clamp surface is equal to the distance between the top surface and bottom surface of the curing member (100, 200, 300, 400) so that as the blade holder (106, 216, 220, 310, 420) and sipe blade (108, 220, 312, 402) are inserted into the curing member (100, 200, 300, 400), the clamp surfaces of the blade holder (106, 216, 220, 310, 420) and sipe blade (108, 220, 312, 402) are flush with the bottom surface of the curing member (100, 200, 300, 400) and the top surface of the blade holder (106, 216, 220, 310, 420) is flush with the top surface of the curing member (100, 200, 300, 400).

8. The apparatus of claim 7 which further comprises a retainer member that has a clearance hole which clears the heels of the sipe blade (108, 220, 312, 402) and the blade holder (106, 216, 220, 310, 420) and is clamped against the curing member (100, 200, 300, 400) while pressing onto the clamp surfaces of the blade holder and sipe blade (108, 220, 312, 402).

9. The apparatus of claim 2 wherein the sipe blade (108, 220, 312, 402) has a side surface adjacent its heel and the blade holder has a side surface adjacent its heel, said side surface of the sipe blade (108, 220, 312, 402) extending past the side surface of the blade holder (106, 216, 220, 310, 420).

10. The apparatus of claim 1 wherein said blade holder has a body that defines a hole (180) that passes through to said slit and wherein the sipe blade (108, 220, 312, 402) has a slot (140), said apparatus further comprising a stop member that is inserted into the hole of the blade holder (106, 216, 220, 310, 420) and extends into the slit so that when the blade is inserted into the slit of the blade holder the slot (140) receives the stop member.

11. The apparatus of claim 10 wherein the stop member is a roll pin (182).

12. The apparatus of claim 6 wherein the bottom surface of the curing member (100, 200, 300, 400) is coplanar with the bottom surface of the heels of the blade holder and sipe blade (108, 220, 312, 402), said bottom surface of the curing member (100, 200, 300, 400) defining a cavity with a top surface that is coplanar with the clamp surfaces of the blade holder (106, 216, 220, 310, 420) and sipe blade (108, 220, 312, 402), said apparatus further comprising a retainer member which is disposed in said cavity and clamped onto the curing member (100, 200, 300, 400) while pressing onto the clamping surfaces of the blade holder (106, 216, 220, 310, 420) and sipe blade (108, 220, 3 12, 402).

13. The apparatus of claim 2 wherein said slit extends completely through the heel of the blade holder (106, 216, 220, 310, 420).

14. The apparatus of claim 1 wherein the curing member (100, 200, 300, 400) is a curing plate for use with a retread press.

15. The apparatus of claim 1 wherein the curing member (100, 200, 300, 400) is a mold sector with a concave curing surface (146).

16. The apparatus of claim 1 wherein the sipe blade (108, 220, 312, 402) is a three dimensional sipe blade (108, 220, 312, 402).

17. The apparatus of claim 10 wherein the hole (180) of the blade holder (106, 216, 220, 310, 420) is off centered with respect to its body and the slot of the sipe blade (108, 220, 312, 402) is also off centered with respect to its body.

18. The apparatus of claim 17 wherein the blade holder (106, 216, 220, 310, 420) further comprises a first side surface (120) that is adjacent to said first heel (156) and a second heel (130, 162) and a second side surface (122, said first heel (156) extending further from the first side surface (120) than the second heel (130) extends from the second side surface, said apparatus further comprising a second blade holder (106, 216; 220, 310, 420) that is similarly configured to the first blade holder (106, 216, 220, 310, 420), said apparatus further comprising a curing member (100, 200, 300, 400) that has two apertures that are configured to receive the two blade holders in close proximity so that when one blade holder is inserted into one aperture (102) of the curing member (100, 200, 300, 400) with the first heel (124) being closest to the second aperture of the curing member (100, 200, 300, 400), the second blade holder cannot be inserted into the second aperture with its first heel (124) being closest to the first aperture because said heels interfere with each other, forcing the assembler to reverse the orientation of the second blade holder when inserting the second blade holder into the curing member (100, 200, 300, 400).

19. The apparatus of claim 18 which further comprises a retainer that is mounted onto the curing member (100, 200, 300, 400), said blade holders (106, 216, 220, 310, 420) and sipe blade (108, 220, 312, 402) being sandwiched between the curing member (100, 200, 300, 400) and the retainer and wherein said curing member (100, 200, 3 00, 400) has a notch at one end and a bolt extending from the other end, said apparatus further comprising a second similarly configured curing member (100, 200, 300, 400) and retainer subassembly, said notches and bolts being configured so that as one curing member (100, 200, 300, 400) and retainer subassembly is inserted into a retread press or mold its notch will receive the bolt of the adjacent curing member (100, 200, 300, 400) and retainer subassembly.

20. The apparatus of claim 4 wherein the second portion of the sipe blade (108, 220, 312, 402) further comprises a tab that extends below the heel of the sipe blade (108, 220, 312, 402), said tab also fitting within the slit (178) of the blade holder (106, 216, 220, 310, 420) and being located below the top surface (126) of the heel of the blade holder (106, 216, 220, 310, 420).

21. A method for assembling and disassembling an apparatus for molding or retreading tires comprising the following steps:
providing a curing member (100, 200, 300, 400) with a top or curing surface, bottom surface and an aperture that extends from the top surface (126) to the bottom surface (134;
providing a blade holder (106, 216, 220, 310, 420) with a slit found on its top or
curing surface;
providing a sipe blade (108, 220, 312, 402) with a first portion (116) for molding or forming a sipe in the tread stock of a tire and a second portion (118) that fits within the slit of the blade holder(106, 216, 220, 310, 420);
inserting the sipe blade (108, 220, 312, 402) into the slit of the blade holder (106, 216, 220, 310, 420) by passing the sipe blade (108, 220, 312, 402) through the curing surface of the blade holder (106, 216, 220, 310, 420);
inserting the sipe blade (108, 220, 312, 402) and blade holder (106, 216, 220, 310, 420) into the aperture of the curing member (100, 200, 300, 400); and
retaining the blade holder (106, 216, 220, 310, 420) and sipe blade (108, 220, 312, 402) in the curing member (100, 200, 300, 400).

22. The method of claim 21 further comprising the following steps:
removing any means retaining the blade holder (106, 216, 220, 310, 420) and sipe blade in the apparatus;
extracting the blade holder (106, 216, 220, 310, 420) and sipe blade (108, 220, 312, 402) from aperture of the curing member; and
extracting the sipe blade (108, 220, 312, 402) from the slit of the blade holder (106, 216, 220, 310, 420) through its curing surface.

## Patentansprüche

1. Vorrichtung zum Formen oder Runderneuern eines Reifens mit Lamellen in seinem Laufflächenmaterial, welche den Austausch von Lamellen ermöglicht und umfasst:
ein Vulkanisierelement (100, 200, 300, 400), das eine Oberseite, welche mit der Lauffläche des Reifens in Kontakt kommt, und eine Unterseite aufweist, wobei diese Seiten eine erste Öffnung definieren;
einen Blatthalter (106, 216, 220, 310, 420), welcher so gestaltet ist, dass er in die erste Öffnung des Vulkanisierelements (100, 200, 300, 400) passt, wobei der Blatthalter (106, 216, 220, 310, 420) eine Oberseite aufweist, welche mit der Lauffläche des Reifens in Kontakt kommt, und einen Körper, welcher einen Schlitz definiert, der eine vorbestimmte Gestalt aufweist, wobei der Blatthalter (106, 216, 220, 310, 420) außerdem einen Fuß mit einer Oberseite, die mit dem Vulkanisierelement (100, 200, 300, 400) in Kontakt kommt, und einer Unterseite aufweist; und
ein Lamellenblatt (108, 220, 312, 402), welches einen ersten Abschnitt (116) zum Formen einer Lamelle in der Reifenlauffläche und einen zweiten Abschnitt (118) zum Halten des Blattes innerhalb der Vorrichtung, welcher einen Fuß mit einer Oberseite und einer Unterseite umfasst, aufweist, wobei der zweite Abschnitt (118) eine Form aufweist, welche zu dem Schlitz des Blatthalters (106, 216, 220, 310, 420) komplementär ist, so dass das Lamellenblatt (108, 220, 312, 402) in den Blatthalter (106, 216, 220, 310, 420) eingepasst werden kann.

2. Vorrichtung nach Anspruch 1, wobei sich der Schlitz des Blatthalters (106, 216, 220, 310, 420) in den Fuß des Blatthalters (106, 216, 220, 310, 420) hinein erstreckt.

3. Vorrichtung nach Anspruch 2, wobei der zweite Abschnitt (118) des Lamellenblattes (108, 220, 312, 402) wenigstens teilweise innerhalb des Fußes des Blatthalters (106, 216, 220, 310, 420) angeordnet ist und die Oberseiten der Füße des Blatthalters (106, 216, 220, 310, 420) und des Lamellenblattes (108 koplanar sind und mit dem Vulkanisierelement (100, 200, 300, 400) in Kontakt kommen.

4. Vorrichtung nach Anspruch 2, wobei die Unterseite des Fußes des Lamellenblattes (108, 220, 312, 402) auf der Oberseite des Fußes des Blatthalters (106, 216, 220, 310, 420) ruht.

5. Vorrichtung nach Anspruch 3, wobei der Blatthalter (106, 216, 220, 310, 420) eine Klemmfläche (172) umfasst, welche sich oberhalb der Unterseite seines Fußen befindet, und das Lamellenblatt (108, 220, 312, 402) ebenfalls eine Klemmfläche umfasst, welche sich oberhalb der Unterseite seines Fußen befindet.

6. Vorrichtung nach Anspruch 5, wobei die Klemmflächen des Blatthalters (106, 216, 220, 310, 420) und des Lamellenblattes (108, 220, 312, 402) koplanar sind.

7. Vorrichtung nach Anspruch 6, wobei die Klemmflächen (172) des Blatthalters (106, 216, 220, 310, 420) und des Lamellenblattes (108, 220, 312, 402) mit den Oberseiten der Füße des Blatthalters (106, 216, 220, 310, 420) und des Lamellenblattes (108, 220, 312, 402) koplanar sind und wobei der Abstand von der Oberseite des Blatthalters (106, 216, 220, 310, 420) zu seiner Klemmfläche gleich dem Abstand zwischen der Oberseite und der Unterseite des Vulkanisierelements (100, 200, 300, 400) ist, so dass, wenn der Blatthalter (106, 216, 220, 310, 420) und das Lamellenblatt (108, 220, 312, 402) in das Vulkanisierelement (100, 200, 300, 400) eingesetzt sind, die Klemmflächen des Blatthalters (106, 216, 220, 310, 420) und des Lamellenblattes (108, 220, 312, 402) mit der Unterseite des Vulkanisierelements (100, 200, 300, 400) bündig sind und die Oberseite des Blatthalters (106, 216, 220, 310, 420) mit der Oberseite des Vulkanisierelements (100, 200, 300, 400) bündig ist.

8. Vorrichtung nach Anspruch 7, welche ferner ein Halteelement umfasst, das ein Durchgangsloch aufweist, welches die Füße des Lamellenblattes (108, 220, 312, 402) und des Blatthalters (106, 216, 220, 310, 420) aufnimmt, und das an dem Vulkanisierelement (100, 200, 300, 400) festgeklemmt ist, wobei es Druck auf die Klemmflächen des Blatthalters und des Lamellenblattes (108, 220, 312, 402) ausübt.

9. Vorrichtung nach Anspruch 2, wobei das Lamellenblatt (108, 220, 312, 402) eine seinem Fuß benachbarte Seitenfläche aufweist und der Blatthalter eine seinem Fuß benachbarte Seitenfläche aufweist, wobei sich die Seitenfläche des Lamellenblattes (108, 220, 312, 402) an der Seitenfläche des Blatthalters (106, 216, 220, 310, 420) vorbei erstreckt.

10. Vorrichtung nach Anspruch 1, wobei der Blatthalter einen Körper aufweist, welcher ein Loch (180) definiert, das durch den Schlitz hindurch verläuft, und wobei das Lamellenblatt (108, 220, 312, 402) eine Kerbe (140) aufweist, wobei die Vorrichtung ferner ein Anschlagelement umfasst, welches in das Loch des Blatthalters (106, 216, 220, 310, 420) eingesetzt wird und sich in den Schlitz hinein erstreckt, so dass, wenn das Blatt in den Schlitz des Blatthalters eingesetzt wird, die Kerbe (140) das Anschlagelement aufnimmt.

11. Vorrichtung nach Anspruch 10, wobei das Anschlagelement ein Spannstift (182) ist.

12. Vorrichtung nach Anspruch 6, wobei die Unterseite des Vulkanisierelements (100, 200, 300, 400) koplanar mit der Unterseite der Füße des Blatthalters und des Lamellenblattes (108, 220, 312, 402) ist, wobei die Unterseite des Vulkanisierelements (100, 200, 300, 400) einen Hohlraum mit einer Oberseite definiert, welche koplanar mit den Klemmflächen des Blatthalters (106, 216, 220, 310, 420) und des Lamellenblattes (108, 220, 312, 402) ist, wobei die Vorrichtung ferner ein Halteelement umfasst, welches in dem Hohlraum angeordnet ist und an dem Vulkanisierelement (100, 200, 300, 400) festgeklemmt ist, wobei es Druck auf die Klemmflächen des Blatthalters (106, 216, 220, 310, 420) und des Lamellenblattes (108, 220, 312, 402) ausübt.

13. Vorrichtung nach Anspruch 2, wobei sich der Schlitz vollständig durch den Fuß des Blatthalters (106, 216, 220, 310, 420) hindurch erstreckt.

14. Vorrichtung nach Anspruch 1, wobei das Vulkanisierelement (100, 200, 300, 400) eine Vulkanisierplatte zur Verwendung mit einer Runderneuerungspresse ist.

15. Vorrichtung nach Anspruch 1, wobei das Vulkanisierelement (100, 200, 300, 400) ein Formsektor mit einer konkaven Vulkanisierfläche (146) ist.

16. Vorrichtung nach Anspruch 1, wobei das Lamellenblatt (108, 220, 312, 402) ein dreidimensionales Lamellenblatt (108, 220, 312, 402) ist.

17. Vorrichtung nach Anspruch 10, wobei das Loch (180) des Blatthalters (106, 216, 220, 310, 420) außermittig in Bezug auf dessen Körper ist und die Kerbe des Lamellenblattes (108, 220, 312, 402) ebenfalls außermittig in Bezug auf dessen Körper ist.

18. Vorrichtung nach Anspruch 17, wobei der Blatthalter (106, 216, 220, 310, 420) ferner eine erste Seitenfläche (120), welche dem ersten Fuß (156) benachbart ist, und einen zweiten Fuß (130, 162) und eine zweite Seitenfläche (122 umfasst, wobei sich der erste Fuß (156) weiter von der ersten Seitenfläche (120) weg erstreckt, als sich der zweite Fuß (130) von der zweiten Seitenfläche weg erstreckt, wobei die Vorrichtung ferner einen zweiten Blatthalter (106, 216, 220, 310, 420) umfasst, welcher ähnlich wie der erste Blatthalter (106, 216, 220, 310, 420) gestaltet ist, wobei die Vorrichtung ferner ein Vulkanisierelement (100, 200, 300, 400) umfasst, welches zwei Öffnungen aufweist, die dafür ausgebildet sind, die zwei Blatthalter nahe beieinander aufzunehmen, so dass, wenn ein Blatthalter so in eine Öffnung (102) des Vulkanisierelements (100, 200, 300, 400) eingesetzt ist, dass der erste Fuß (124) der zweiten Öffnung des Vulkanisierelements (100, 200, 300, 400) am nächsten ist, der zweite Blatthalter nicht so in die zweite Öffnung eingesetzt werden kann, dass sein erster Fuß (124) der ersten Öffnung am nächsten ist, da die Füße miteinander kollidieren würden, wodurch der Monteur gezwungen wird, die Ausrichtung des zweiten Blatthalters umzukehren, wenn er den zweiten Blatthalter in das Vulkanisierelement (100, 200, 300, 400) einsetzt.

19. Vorrichtung nach Anspruch 18, welche ferner einen Halter umfasst, der auf dem Vulkanisierelement (100, 200, 300, 400) angebracht ist, wobei die Blatthalter (106, 216, 220, 310, 420) und das Lamellenblatt (108, 220, 312, 402) sandwichartig zwischen dem Vulkanisierelement (100, 200, 300, 400) und dem Halter angeordnet sind, und wobei das Vulkanisierelement (100, 200, 300, 400) eine Ausklinkung an einem Ende und einen sich von dem anderen Ende aus erstreckenden Bolzen aufweist, wobei die Vorrichtung ferner eine zweite, ähnlich gestaltete Unterbaugruppe aus Vulkanisierelement (100, 200, 300, 400) und Halter umfasst, wobei die Ausklinkungen und Bolzen so ausgebildet sind, dass, wenn eine Unterbaugruppe aus Vulkanisierelement (100, 200, 300, 400) und Halter in eine Runderneuerungspresse oder Form eingesetzt wird, ihre Ausklinkung den Bolzen der benachbarten Unterbaugruppe aus Vulkanisierelement (100, 200, 300, 400) und Halter aufnimmt.

20. Vorrichtung nach Anspruch 4, wobei der zweite Abschnitt des Lamellenblattes (108, 220, 312, 402) ferner eine Lasche umfasst, welche sich unterhalb des Fußes des Lamellenblattes (108, 220, 312, 402) erstreckt, wobei die Lasche ebenfalls in den Schlitz (178) des Blatthalters (106, 216, 220, 310, 420) passt und unterhalb der Oberseite (126) des Fußes des Blatthalters (106, 216, 220, 310, 420) angeordnet ist.

21. Verfahren zum Zusammenbauen und Zerlegen einer Vorrichtung zum Formen oder Runderneuern von Reifen, welches die folgenden Schritte umfasst:
Bereitstellen eines Vulkanisierelements (100, 200, 300, 400) mit einer Oberseite oder Vulkanisierfläche, einer Unterseite und einer Öffnung, welche sich von der Oberseite (126) zu der Unterseite (134 erstreckt;
Bereitstellen eines Blatthalters (106, 216, 220, 310, 420) mit einem Schlitz, der sich an seiner Oberseite oder Vulkanisierfläche befindet;
Bereitstellen eines Lamellenblattes (108, 220, 312, 402) mit einem ersten Abschnitt (116) zum Formen oder Ausbilden einer Lamelle in dem Laufflächenmaterial eines Reifens und einem zweiten Abschnitt (118), welcher in den Schlitz des Blatthalters (106, 216, 220, 310, 420) passt;
Einsetzen des Lamellenblattes (108, 220, 312, 402) in den Schlitz des Blatthalters (106, 216, 220, 310, 420) durch Hindurchbewegen des Lamellenblattes (108, 220, 312, 402) durch die Vulkanisierfläche des Blatthalters (106, 216, 220, 310, 420);
Einsetzen des Lamellenblattes (108, 220, 312, 402) und des Blatthalters (106, 216, 220, 310, 420) in die Öffnung des Vulkanisierelements (100, 200, 300, 400); und
Halten des Blatthalters (106, 216, 220, 310, 420) und des Lamellenblattes (108, 220, 312, 402) in dem Vulkanisierelement (100, 200, 300, 400).

22. Verfahren nach Anspruch 21, welches ferner die folgenden Schritte umfasst:
Entfernen eines etwaigen Mittels, das den Blatthalter (106, 216, 220, 310, 420) und das Lamellenblatt in der Vorrichtung hält;
Herausziehen des Blatthalters (106, 216, 220, 310, 420) und des Lamellenblattes (108, 220, 312, 402) aus der Öffnung des Vulkanisierelements; und
Herausziehen des Lamellenblattes (108, 220, 312, 402) aus dem Schlitz des Blatthalters (106, 216, 220, 310, 420) durch dessen Vulkanisierfläche.

## Revendications

1. Dispositif pour le moulage ou le rechapage d'un pneumatique comportant des lamelles dans sa bande de roulement qui facilite le remplacement des lamelles comprenant :
un élément de vulcanisation (100, 200, 300, 400) qui a une surface supérieure qui entre en contact avec la bande de roulement du pneumatique et une surface inférieure, lesdites surfaces définissant une première ouverture ;
un porte-lame (106, 216, 220, 310, 420) qui est configuré pour se loger dans la première ouverture de l'élément de vulcanisation (100, 200, 300, 400), ledit porte-lame (106, 216, 220, 310, 420) ayant une surface supérieure qui entre en contact avec la bande de roulement du pneumatique et un corps qui définit une entaille qui a une configuration prédéterminée, ledit porte-lame (106, 216, 220, 310, 420) ayant aussi un talon avec une surface supérieure qui entre en contact avec l'élément de vulcanisation (100, 200, 300, 400) et une surface inférieure ; et
une lame d'incision (108, 220, 312, 402) qui comporte une première partie (116) pour former une lamelle dans la bande de roulement du pneumatique et une deuxième partie (118) pour retenir la lame dans le dispositif comprenant un talon ayant une surface supérieure et une surface inférieure, ladite deuxième partie (118) ayant une forme qui est complémentaire de l'entaille du porte-lame (106, 216, 220, 310, 420), de sorte que la lame d'incision (108, 220, 312, 402) peut se loger dans le porte-lame (106, 216, 220, 310, 420).

2. Dispositif selon la revendication 1, dans lequel ladite entaille du porte-lame (106, 216, 220, 310, 420) s'étend dans le talon du porte-lame (106, 216, 220, 310, 420).

3. Dispositif selon la revendication 2, dans lequel ladite deuxième partie (118) de la lame d'incision (108, 220, 312, 402) est au moins en partie située dans le talon du porte-lame (106, 216, 220, 310, 420) et les surfaces supérieures des talons du porte-lame (106, 216, 220, 310, 420) et de la lame d'incision (108 sont coplanaires et touchent l'élément de vulcanisation (100, 200, 300, 400).

4. Dispositif selon la revendication 2, dans lequel la surface inférieure du talon de la lame d'incision (108, 220, 312, 402) repose sur la surface supérieure du talon du porte-lame (106, 216, 220, 310, 420).

5. Dispositif selon la revendication 3, dans lequel le porte-lame (106, 216, 220, 310, 420) comprend une surface de serrage (172) qui se trouve au-dessus de la surface inférieure de son talon et la lame d'incision (108, 220, 312, 402) a aussi une surface de serrage qui se trouve au-dessus de la surface inférieure de son talon.

6. Dispositif selon la revendication 5, dans lequel les surfaces de serrage du porte-lame (106, 216, 220, 310, 420) et de la lame d'incision (108, 220, 312, 402) sont coplanaires.

7. Dispositif selon la revendication 6, dans lequel les surfaces de serrage (172) du porte-lame (106, 216, 220, 310, 420) et de la lame d'incision (108, 220, 312, 402) sont coplanaires avec les surfaces supérieures des talons du porte-lame (106, 216, 220, 310, 420) et de la lame d'incision (108, 220, 312, 402) et dans lequel la distance de la surface supérieure du porte-lame (106, 216, 220, 310, 420) à sa surface de serrage est égale à la distance entre la surface supérieure et la surface inférieure de l'élément de vulcanisation (100, 200, 300, 400) de sorte que, lors de l'insertion du porte-lame (106, 216, 220, 310, 420) et de la lame d'incision (108, 220, 312, 402) dans l'élément de vulcanisation (100, 200, 300, 400), les surfaces de serrage du porte-lame (106, 216, 220, 310, 420) et de la lame d'incision (108, 220, 312, 402) sont de niveau avec la surface inférieure de l'élément de vulcanisation (100, 200, 300, 400) et la surface supérieure du porte-lame (106, 216, 220, 310, 420) est de niveau avec la surface supérieure de l'élément de vulcanisation (100, 200, 300, 400).

8. Dispositif selon la revendication 7, comprenant en outre un élément de retenue qui comporte un trou de dégagement qui dégage les talons de la lame d'incision (108, 220, 312, 402) et du porte-lame (106, 216, 220, 310, 420) et qui est serré contre l'élément de vulcanisation (100, 200, 300, 400) tout en exerçant une pression sur les surfaces de serrage du porte-lame et de la lame d'incision (108, 220, 312, 402).

9. Dispositif selon la revendication 2, dans lequel la lame d'incision (108, 220, 312, 402) a une surface latérale adjacente à son talon et le porte-lame a une surface latérale adjacente à son talon, ladite surface latérale de la lame d'incision (108, 220, 312, 402) s'étendant au-delà de la surface latérale du porte-lame (106, 216, 220, 310, 420).

10. Dispositif selon la revendication 1, dans lequel ledit porte-lame a un corps qui définit un trou (180) qui va jusqu'à ladite entaille et dans lequel la lame d'incision (108, 220, 312, 402) comporte une fente (140), ledit dispositif comprenant en outre un élément d'arrêt qui est inséré dans le trou du porte-lame (106, 216, 220, 310, 420) et qui s'étend dans l'entaille de telle manière que lorsque la lame est insérée dans l'entaille du porte-lame, la fente (140) reçoit l'élément d'arrêt.

11. Dispositif selon la revendication 10, dans lequel l'élément d'arrêt est une goupille élastique (182).

12. Dispositif selon la revendication 6, dans lequel la surface inférieure de l'élément de vulcanisation (100, 200, 300, 400) est coplanaire avec la surface inférieure des talons du porte-lame et de la lame d'incision (108, 220, 312, 402), ladite surface inférieure de l'élément de vulcanisation (100, 200, 300, 400) définissant une cavité ayant une surface supérieure qui est coplanaire avec les surfaces de serrage du porte-lame (106, 216, 220, 310, 420) et de la lame d'incision (108, 220, 312, 402), ledit dispositif comprenant en outre un élément de retenue qui est placé dans ladite cavité et qui est serré sur l'élément de vulcanisation (100, 200, 300, 400) tout en exerçant une pression sur les surfaces de serrage du porte-lame (106, 216, 220, 310, 420) et de la lame d'incision (108, 220, 312, 402).

13. Dispositif selon la revendication 2, dans lequel ladite entaille s'étend complètement à travers le talon du porte-lame (106, 216, 220, 310, 420).

14. Dispositif selon la revendication 1, dans lequel l'élément de vulcanisation (100, 200, 300, 400) est une plaque de vulcanisation destinée à être utilisée avec une presse à rechaper.

15. Dispositif selon la revendication 1, dans lequel l'élément de vulcanisation (100, 200, 300, 400) est un secteur de moule ayant une surface de vulcanisation concave (146).

16. Dispositif selon la revendication 1, dans lequel la lame d'incision (108, 220, 312, 402) est une lame d'incision tridimensionnelle (108, 220, 312, 402).

17. Dispositif selon la revendication 10, dans lequel le trou (180) du porte-lame (106, 216, 220, 310, 420) est décentré par rapport à son corps et la fente de la lame d'incision (108, 220, 312, 402) est aussi décentrée par rapport à son corps.

18. Dispositif selon la revendication 17, dans lequel le porte-lame (106, 216, 220, 310, 420) comprend en outre une première surface latérale (120) qui est adjacente audit premier talon (156) et un deuxième talon (130, 162) et une deuxième surface latérale (122, ledit premier talon (156) s'étendant davantage depuis la première surface latérale (120) que le deuxième talon (130) ne s'étend depuis la deuxième surface latérale, ledit dispositif comprenant en outre un deuxième porte-lame (106, 216, 220, 310, 420) qui est configuré de façon similaire au premier porte-lame (106, 216, 220, 310, 420), ledit dispositif comprenant en outre un élément de vulcanisation (100, 200, 300, 400) qui comporte deux ouvertures qui sont configurées pour recevoir les deux porte-lames en proximité étroite, de sorte que lorsque l'on insère un porte-lame dans une ouverture (102) de l'élément de vulcanisation (100, 200, 300, 400) avec le premier talon (124) placé le plus proche de la deuxième ouverture de l'élément de vulcanisation (100, 200, 300, 400), le deuxième porte-lame ne peut pas être inséré dans la deuxième ouverture avec son premier talon (124) placé le plus proche de la première ouverture parce que lesdits talons se gênent, ce qui oblige le monteur à inverser l'orientation du deuxième porte-lame lors de l'insertion du deuxième porte-lame dans l'élément de vulcanisation (100, 200, 300, 400).

19. Dispositif selon la revendication 18, comprenant en outre une pièce de retenue qui est montée sur l'élément de vulcanisation (100, 200, 300, 400), lesdits porte-lames (106, 216, 220, 310, 420) et ladite lame d'incision (108, 220, 312, 402) étant pris entre l'élément de vulcanisation (100, 200, 300, 400) et la pièce de retenue et dans lequel ledit élément de vulcanisation (100, 200, 300, 400) a une encoche à une extrémité et un boulon s'étendant depuis l'autre extrémité, ledit dispositif comprenant en outre un deuxième sous-ensemble élément de vulcanisation (100, 200, 300, 400) et pièce de retenue configuré de façon similaire, lesdites encoches et boulons étant configurés de telle manière que lors de l'insertion d'un sous-ensemble élément de vulcanisation (100, 200, 300, 400) et pièce de retenue dans une presse ou moule à rechaper, son encoche reçoit le boulon du sous-ensemble élément de vulcanisation (100, 200, 300, 400) et pièce de retenue adjacent.

20. Dispositif selon la revendication 4, dans lequel la deuxième partie de la lame d'incision (108, 220, 312, 402) comprend en outre une patte qui s'étend sous le talon de la lame d'incision (108, 220, 312, 402), ladite patte se logeant aussi dans l'entaille (178) du porte-lame (106, 216, 220, 310, 420) et étant située sous la surface supérieure (126) du talon du porte-lame (106, 216, 220, 310, 420).

21. Procédé de montage et de démontage d'un dispositif pour le moulage ou le rechapage de pneumatiques comprenant les étapes suivantes :
fournir un élément de vulcanisation (100, 200, 300, 400) qui a une surface supérieure ou surface de vulcanisation, une surface inférieure et une ouverture qui s'étend de la surface supérieure (126) à la surface inférieure (134 ;
fournir un porte-lame (106, 216, 220, 310, 420) comportant une entaille sur sa surface supérieure ou surface de vulcanisation ;
fournir une lame d'incision (108, 220, 312, 402) qui comporte une première partie (116) pour mouler ou former une lamelle dans la bande de roulement d'un pneumatique et une deuxième partie (118) qui se loge dans l'entaille du porte-lame (106, 216, 220, 310, 420) ;
insérer la lame d'incision (108, 220, 312, 402) dans l'entaille du porte-lame (106, 216, 220, 310, 420) en faisant passer la lame d'incision (108, 220, 312, 402) à travers la surface de vulcanisation du porte-lame (106, 216, 220, 310, 420) ;
insérer la lame d'incision (108, 220, 312, 402) et le porte-lame (106, 216, 220, 310, 420) dans l'ouverture de l'élément de vulcanisation (100, 200, 300, 400) ; et
retenir le porte-lame (106, 216, 220, 310, 420) et la lame d'incision (108, 220, 312, 402) dans l'élément de vulcanisation (100, 200, 300, 400).

22. Procédé selon la revendication 21, comprenant en outre les étapes suivantes :
retirer tout moyen retenant le porte-lame (106, 216, 220, 310, 420) et la lame d'incision dans le dispositif ;
extraire le porte-lame (106, 216, 220, 310, 420) et la lame d'incision (108, 220, 312, 402) de l'ouverture de l'élément de vulcanisation ; et
extraire la lame d'incision (108, 220, 312, 402) de l'entaille du porte-lame (106, 216, 220, 310, 420) à travers sa surface de vulcanisation.
